# EUROPEAN PATENT APPLICATION

(11) **EP 3 992 874 A1**
(43) Date of publication of application: **04.05.2022**
(21) Application number: 20830792.6
(22) Date of filing: 26.06.2020
(51) Int. Cl.: G06Q 10/06, G06Q 50/08

(54) **WORK MACHINE MANAGEMENT SYSTEM, WORK MACHINE MANAGEMENT DEVICE, WORKER TERMINAL, AND CONTRACTOR TERMINAL**

(30) Priority: 27.06.2019 JP 2019119886
(71) Applicant: Sumitomo Heavy Industries, Ltd., Tokyo 141-6025 (JP)
(72) Inventor: OGAWA, Masaki, Yokosuka-shi, Kanagawa 237-8555 (JP); SHINATO, Ayano, Yokosuka-shi, Kanagawa 237-8555 (JP)
(74) Representative: Louis Pöhlau Lohrentz
(86) International application number: PCT/JP2020/025364
(87) International publication number: WO 2020/262661

(57) **Abstract**

A management system of a work machine of managing the work machine includes a skill evaluation unit that generates and stores skill evaluation information associated with an evaluation result of an operating skill of a worker who operates the work machine and identification information identifying the worker in a storage unit based on work performance information obtained from the work machine, a search processing unit that receives a search condition of the worker input from a contractor's terminal device, searches the storage unit, and extracts the worker's identification information associated with the evaluation result that satisfies the search condition; and an output unit that outputs the search result to the contractor's terminal device.

## Description

### FIELD OF THE INVENTION

The present invention relates to a management system for a work machine, a management device for a work machine, a terminal device for a worker, and a terminal device for a contractor.

### BACKGROUND OF THE INVENTION

Conventionally, there has been a system in which a database is prepared to register information on job seekers, and when requested by a company or the like, job seekers matching the job offer conditions are selected and introduced to the company or the like.

### RELATED-ART DOCUMENT

### Patent Documents

Patent Document 1: Japanese Patent Application Laid-Open No. 2017-224238
Patent Document 2: Japanese Patent Application Laid-Open No. 2018-169869
Patent Document 3: Japanese Patent Application Laid-Open No. 2017-228168

### SUMMARY OF THE INVENTION

### Problem to be solved by the Invention

The conventional system described above does not support industries that require different skills depending on the type of work, such as operations using work machines.

Therefore, conventionally, when using a work machine, it is necessary for the job posters to find and secure personnel with the necessary skills depending on the type of work, and the job seeker must search for job openings for which his/her skills are required, which is time-consuming on both sides.

Therefore, in light of the above circumstances, the purpose of the invention is to easily assign personnel with skills appropriate for the type of work.

### Means for Solving the Problem

A management system of a work machine of managing the work machine includes a skill evaluation unit that generates and stores skill evaluation information associated with an evaluation result of an operating skill of a worker who operates the work machine and identification information identifying the worker in a storage unit based on work performance information obtained from the work machine, a search processing unit that receives a search condition of the worker input from a contractor's terminal device, searches the storage unit, and extracts the worker's identification information associated with the evaluation result that satisfies the search condition; and an output unit that outputs the search result to the contractor's terminal device.

Further, a management device of a work machine includes a skill evaluation unit that generates and stores a skill evaluation information corresponding to an evaluation result of an operating skill of a worker who operates the work machine and an identification information identifying the worker in a storage unit by using work performance information obtained from the work machine; a search processing unit that receives a search condition of the worker input from a contractor's terminal device, search the storage unit, and extracts the worker's identification information associated with the evaluation result satisfying the search condition; and an output unit that outputs the search result to the contractor's terminal device.

### Effects of the Invention

Personnel with skills appropriate for the type of work can easily be assigned.

### BRIEF DESCRIPITION OF THE DRAWINGS

FIG. 1 is a schematic diagram illustrating an example of a management system of an embodiment of a shovel;
FIG. 2 is a configuration diagram illustrating an example of a management system of a shovel of the embodiment;
FIG. 3 is a diagram illustrating an example of a hardware configuration of a management device of the embodiment;
FIG. 4 is a diagram illustrating an example of a worker information storage unit of the embodiment;
FIG. 5 is a diagram illustrating an example of a desired condition information storage unit of the embodiment;
FIG. 6 is a diagram illustrating an example of a skill evaluation information storage unit of the embodiment;
FIG. 7 is a diagram illustrating an example of a qualification information storage unit of the embodiment;
FIG. 8 is a diagram illustrating a function of a management device of the embodiment;
FIG. 9 is a flowchart illustrating a process of a skill evaluation unit of the embodiment;
FIG. 10 is a sequence diagram illustrating the operation of the management device and a terminal device for a worker and a terminal device for a contractor of the embodiment;
FIG. 11 is a flowchart illustrating processing of a search unit of the embodiment;
FIG. 12A is a first view illustrating a display example of the terminal device for the worker in the embodiment;
FIG. 12B is a second view illustrating a display example of the terminal device for the worker in the embodiment;
FIG. 13A is a third view illustrating a display example of the terminal device for the worker in the embodiment;
FIG. 13B is a fourth view illustrating a display example of the terminal device for the worker in the embodiment;
FIG. 14A is a first view illustrating a display example of a terminal device for a contractor in the embodiment;
FIG. 14B is a second view illustrating a display example of a terminal device for the contractor in the embodiment;
FIG. 15 is a third view illustrating a display example of a terminal device for the contractor in the embodiment;
FIG. 16 is a diagram illustrating the functions of the management device of second embodiment;
FIG. 17 is a diagram illustrating an example of worker information storage unit in second embodiment;
FIG. 18 is a flowchart illustrating processing of a search unit of second embodiment;
FIG. 19 is a first view illustrating a display example of a terminal device for a contractor in second embodiment;
FIG. 20 is a diagram illustrating a display example of a terminal device for a worker in second embodiment;
FIG. 21 is a second view illustrating a display example of the terminal device for the contractor in second embodiment;
FIG. 22 is a diagram illustrating the functions of a management device of third embodiment;
FIG. 23 is a diagram illustrating an example of a review information storage unit of third embodiment;
FIG. 24 is a flowchart illustrating the processing of a search unit of third embodiment;
FIG. 25A is a first view illustrating a display example of a worker terminal in third embodiment;
FIG. 25B is a second view illustrating a display example of the worker terminal in third embodiment;
FIG. 26 is a first view illustrating a display example of a terminal device for a contractor of third embodiment;
FIG. 27 is a second view illustrating a display example of the terminal device for the contractor of third embodiment; and
FIG. 28 is a schematic diagram illustrating an example of a management system for a shovel in fourth embodiment.

### DETAILED DESCRIPTION OF THE INVENTION

### [Embodiments]

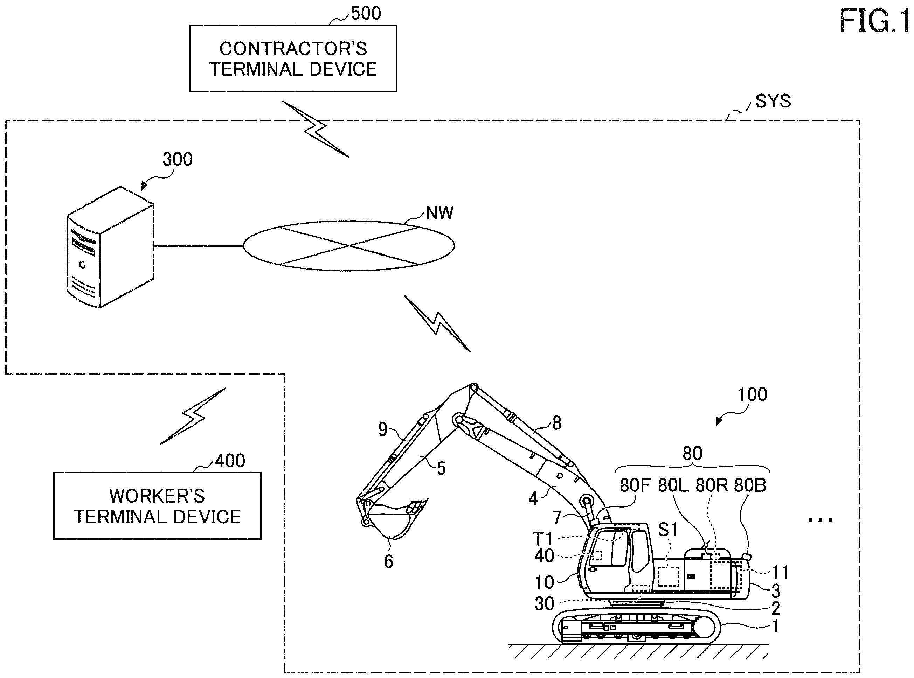

Embodiments will be described below with reference to the drawings. FIG. 1 is a schematic diagram illustrating an example of a management system of an embodiment of a shovel.

The shovel management system SYS of the present embodiment includes a shovel 100 and a management device 300. In the shovel management system SYS, the shovel 100 and the management device 300 communicate with each other via a network, and the management device 300 manages the shovel 100. In the following description, the shovel management system SYS is called the management system SYS.

The management device 300 of the present embodiment communicates with a terminal device 400 or a terminal device 500 through a network.

The shovel 100 of the present embodiment is an example of a working machine. The shovel 100 includes a lower traveling structure 1, an upper turning structure 3 that is mounted to the lower traveling structure 1 in a turnably manner through the turning mechanism 2, a boom 4 as an attachment (working device), an arm 5, a bucket 6, and a cabin 10.

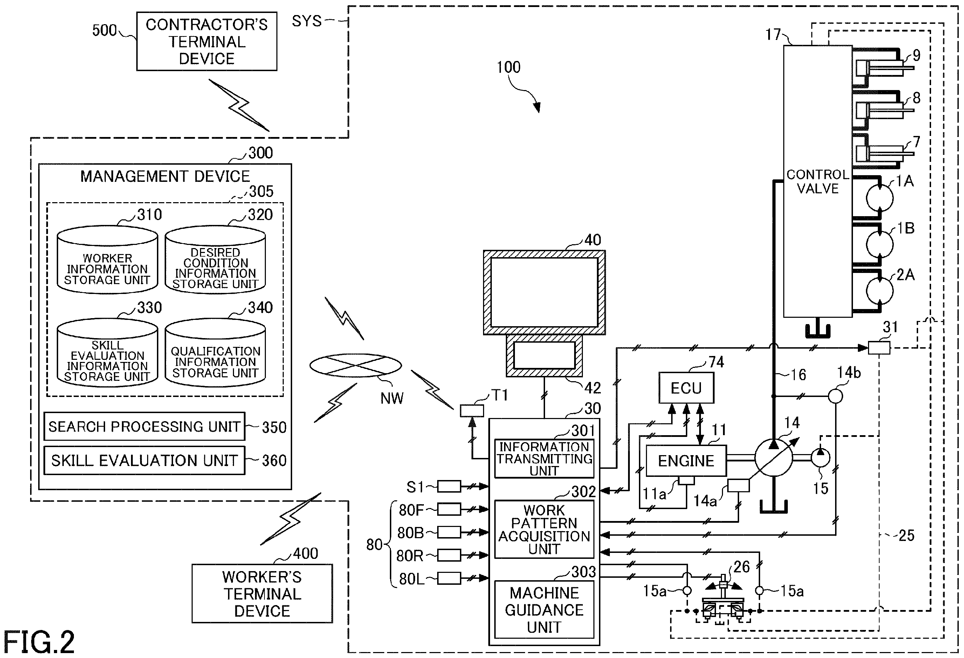

The lower traveling structure 1 includes, for example, a pair of crawlers on the left and right, and each crawler is hydraulically driven by the traveling hydraulic motors 1A and 1B (see FIG. 2), so as to be self-propelling.

The upper turning structure 3 is driven by the turning hydraulic motor 2A (see FIG. 2) to turn relative to the lower traveling structure 1.

The boom 4 is turnably mounted to the front center of the upper turning structure 3 in a vertical direction, the arm 5 is turnably mounted to the distal end of the boom 4 in a vertical direction, and the bucket 6 is turnably mounted to the distal end of the arm 5 in a vertical direction. Boom 4, arm 5, and bucket 6 are hydraulically driven by boom cylinder 7, arm cylinder 8, and bucket cylinder 9, respectively.

The cabin 10 is a cockpit in which an operator (worker) rides and is mounted on the left side of the front of the upper turning structure 3.

The shovel 100 and the management device 300 communication are communicably interconnected to each other via a predetermined communication network NW including, for example, a mobile communication network having a base station as a terminal, a satellite communication network utilizing an aerial communication satellite, the Internet, or the like.

Further, the management device 300 of the present embodiment acquires the actual information representing the actual operations of the shovel 100 performed by the worker.

Actual information includes actual work patterns (hereinafter referred to as "work pattern performance information") for certain types of work (for example, repeated excavation, loading, finishing, and the like) and actual environmental conditions during work (hereinafter referred to as "environmental condition performance information").

The work pattern refers to a series of types of operations of the shovel 100 when performing a given type of work. For example, the working pattern may include the working locus of the moving element such as the lower traveling structure 1, the upper turning structure 3, the boom 4, the arm 5, and the bucket 6. Further, the work pattern performance information is specifically, detection information of various sensors representing the work pattern performance information of the shovel 100 when the shovel 100 actually performs a predetermined type of work. The environmental conditions may also include external environmental conditions, such as those associated with the surrounding environment of the shovel 100, as well as internal environmental conditions, such as variable specifications of the shovel 100 (e.g., arm length, bucket type, or the like) that affect the operation of the shovel 100.

When the shovel 100 acquires the work pattern performance information and the environmental condition performance information, the shovel 100 transmits (uploads) various information including the work pattern performance information and the environmental condition performance information to the management device 300.

In the management system SYS, the management device 300 evaluates the skill of the operation of the shovel 100 by a worker who operates the shovel 100 based on the work pattern performance information received from the shovel 100 and the environmental condition performance information, and maintains the evaluation results for each worker.

The terminal device 400 is, for example, a terminal device used by a worker who operates the shovel 100. In the following description, the terminal device 400 may be referred to as a worker's terminal device 400 or an applicant terminal device 400.

The terminal device 500 of the present embodiment is a terminal device mainly used by a contractor who performs, for example, work using the shovel 100. In the following description, the terminal device 500 may be referred to as a contractor's terminal device 500.

The management device 300 of the present embodiment retains the desirable conditions concerning the work for each worker input from the worker's terminal device 400 for each worker in advance.

Further, when the management device 300 receives the search condition and the search request regarding the worker from the contractor's terminal device 500, the management device 300 identifies the worker having the skill necessary for the work details and who can be engaged in the work based on the desired condition and the evaluation result of each worker, and outputs the identification to the contractor's terminal device 500.

In the example of FIG. 1, the shovel 100 included in the management system SYS is a single shovel, but is not limited thereto. The number of shovels 100 included in the management system SYS may be optional, and all shovels 100 capable of communicating with the management device 300 may be included in the management system SYS.

The management device 300 of the present embodiment is a terminal device installed at a location geographically remote from the shovel 100. The management device 300 is, for example, a server device that is installed in a management center provided outside a work site where the shovel 100 works and is configured mainly by one or more server computers. In this case, the server device may be its own server operated by a business operator operating the management system SYS or an affiliated business operator related to the business operator, or it may be a cloud server.

Next, the management system SYS of the present embodiment will be further described with reference to FIG. 2. FIG. 2 is a configuration diagram illustrating an example of a management system of an embodiment of a shovel.

In the figure, the mechanical power line is indicated as a double line, the high-pressure hydraulic line as a thick solid line, the pilot line as a dashed line, and the electric drive and control line as a thin solid line.

The hydraulic drive system for driving the hydraulic actuator of the shovel 100 of the present embodiment includes an engine 11, a main pump 14, a regulator 14a, and a control valve 17. As described above, the hydraulic drive system of the shovel 100 includes hydraulic actuators such as the traveling hydraulic motors 1A and 1B, the turning hydraulic motor 2A, the boom cylinder 7, the arm cylinder 8, and the bucket cylinder 9 for hydraulically driving the lower traveling structure 1, the upper turning structure 3, the boom 4, the arm 5, and the bucket 6, respectively.

The engine 11 is the main power source in the hydraulic drive system and is mounted, for example, on the rear of the upper turning structure 3. Specifically, the engine 11 turns at a predetermined target speed under the control of an engine control unit (ECU) 74, which will be described later, to drive the main pump 14 and the pilot pump 15. The engine 11 is, for example, a diesel engine fueled with diesel oil.

The regulator 14a controls the discharge amount of the main pump 14. For example, the regulator 14a adjusts the angle (tilt angle) of the slope plate of the main pump 14 in response to control instructions from a controller 30.

The main pump 14, for example, like the engine 11, is mounted on the rear of the upper turning structure 3 to supply hydraulic oil to the control valve 17 through the high-pressure hydraulic line 16. The main pump 14 is driven by the engine 11 as described above. The main pump 14 is, for example, a variable displacement hydraulic pump, and as described above, under the control of the controller 30, the tilt angle of the slope plate is adjusted by the regulator 14a, thereby adjusting the stroke length of the piston and controlling the discharge flow rate (discharge pressure).

The control valve 17, for example, is mounted in the center of the upper turning structure 3 and is a hydraulic operation device which controls the hydraulic drive system in response to an operation by an operator of the operation device 26. As described above, the control valve 17 is connected to the main pump 14 via a high-pressure hydraulic line 16 and selectively supplies hydraulic oil supplied from the main pump 14 to hydraulic actuators (traveling hydraulic motors 1A and 1B, turning hydraulic motor 2A, boom cylinder 7, arm cylinder 8, and bucket cylinder 9) depending on the operating condition of the operation device 26. Specifically, the control valve 17 includes a plurality of control valves that control the flow rate and flow direction of hydraulic oil supplied from the main pump 14 to each of the hydraulic actuators. For example, the control valve 17 includes a control valve corresponding to the boom 4 (boom cylinder 7). For example, the control valve 17 includes a control valve corresponding to the arm 5 (arm cylinder 8). For example, the control valve 17 includes a control valve corresponding to the bucket 6 (bucket cylinder 9). For example, the control valve 17 includes a control valve corresponding to the upper turning structure 3 (turning hydraulic motor 2A). For example, the control valve 17 includes a right-traveling control valve and a left-traveling control valve corresponding to the right-side crawler and the left-side crawler of the lower traveling structure 1.

The operation system of the shovel 100 of the present embodiment includes a pilot pump 15, an operation device 26, and an operation valve 31.

The pilot pump 15 is mounted, for example, on the rear of the upper turning structure 3 and provides pilot pressure through the pilot line 25 to the operation device 26 and the operation valve 31. The pilot pump 15 is, for example, a fixed capacitive hydraulic pump driven by the engine 11 as described above.

The operation device 26 is provided near the cockpit of the cabin 10 and is an operation input configuration for the operator to perform the operation of various operation elements (the lower traveling structure 1, the upper turning structure 3, the boom 4, the arm 5, the bucket 6, and the like). In other words, the operation device 26 is an operation input configuration for the operator to operate the hydraulic actuators (that is, the traveling hydraulic motors 1A and 1B, the turning hydraulic motors 2A, the boom cylinder 7, the arm cylinder 8, the bucket cylinder 9, and the like) driving the respective operating elements. The operation device 26 is connected to a pilot line on its secondary side to the control valve 17. Thus, the control valve 17 may be inputted with a pilot pressure corresponding to the operating conditions of the lower traveling structure 1, the upper turning structure 3, the boom 4, the arm 5, and the bucket 6 of the operation device 26. Thus, the control valve 17 can drive the respective hydraulic actuators according to the operating condition of the operation device 26.

The operation valve 31 adjusts the flow area of the pilot line 25 in response to a control command (for example, control current) from the controller 30. Thus, the operation valve 31 can output the pilot pressure corresponding to the control command to the pilot line on the secondary side using the pilot pressure on the primary side supplied from the pilot pump 15 as the primary pressure. The operation valve 31 is connected to the right and left pilot ports of the control valves corresponding to the respective hydraulic actuators of the control valve 17 to apply pilot pressure to the pilot ports of the control valve in response to control commands from the controller 30. This allows the controller 30 to supply hydraulic oil discharged from the pilot pump 15 to the pilot port of a corresponding control valve in the control valve 17 via the operation valve 31, even if the operation device 26 is not operated by an operator, thereby allowing the hydraulic actuator to operate.

In addition to the operation valve 31, an electromagnetic relief valve may be provided which relieves the hydraulic tank of excessive hydraulic pressure generated in the hydraulic actuator. Accordingly, it is possible to actively suppress the operation of the hydraulic actuator in the case where the operation amount to the operation device 26 by the operator is excessive. For example, electromagnetic relief valves may be provided to relieve the actuating oil tank of the boom cylinder 7, the arm cylinder 8, and bottom-side oil chamber and rod-side oil chamber of the bucket cylinder 9 from excessive pressure.

The control system of the shovel 100 of the present embodiment includes a controller 30, an ECU 74, a discharge pressure sensor 14b, an operation pressure sensor 15a, a display device 40, an input device 42, an imaging device 80, a state detecting device S1, and a communication device T1.

The controller 30 performs drive control of the shovel 100. The controller 30 may implement its functions in any hardware, software, or combination thereof. For example, the controller 30 is configured by a computer including a processor such as a CPU (Central Processing Unit), a memory device such as RAM (Random Access Memory), a non-volatile auxiliary storage device such as ROM (Read Only Memory), and an interface device for various inputs and outputs. The controller 30 implements various functions by executing, for example, various programs installed in the auxiliary storage device on the CPU.

For example, the controller 30 sets a target rotation speed based on a work mode preset by a predetermined operation by an operator or the like and outputs a control command to the ECU 74. Therefore, the controller 30 performs drive control to rotate the engine 11 at a constant speed through the ECU 74.

For example, the controller 30 outputs a control command to the regulator 14a as needed and performs so-called total horsepower control or negative control by changing the discharge amount of the main pump 14.

For example, the controller 30 may have a function to upload various information regarding the shovel 100 to the management device 300 (hereinafter, "upload function"). Specifically, the controller 30 may transmit (upload) the work pattern performance information and the environmental condition performance information during a predetermined type of work of the shovel 100 to the management device 300 through the communication device T1. The controller 30 includes an information transmitting unit 301 as a functional unit related to an upload function that is implemented, for example, by executing one or more programs installed on an auxiliary storage device or the like on a CPU.

For example, the controller 30 controls the machine guidance function that guides the operator's manual operation of the shovel 100 through the operation device 26. The controller 30 may also provide control over machine control functions that automatically assist the operator in manually operating the shovel 100 through the operation device 26. The controller 30 includes a work pattern acquisition unit 302 and a machine guidance unit 303 as functions related to the machine guidance function and the machine control function implemented, for example, by executing one or more programs installed in an auxiliary storage device or the like on the CPU.

Some of the functions of the controller 30 may be implemented by other controllers (controllers). That is, the functions of controller 30 may be implemented in a manner that is distributed by a plurality of controllers. For example, the machine guidance and machine control functions described above may be implemented by a dedicated controller (controller).

The ECU 74 controls various actuators of the engine 11 (for example, a fuel injection device) in response to a control command from the controller 30 and makes a constant rotation at a set target speed (set speed) of the engine 11 (constant rotation control). At this time, the ECU 74 performs the constant rotation control of the engine 11 based on the rotation speed of the engine 11 detected by an engine speed sensor 11a.

The discharge pressure sensor 14b detects the discharge pressure of the main pump 14. A detection signal corresponding to the discharge pressure detected by the discharge pressure sensor 14b is loaded into the controller 30.

The operation pressure sensor 15a, as described above, detects the pilot pressure on the secondary side of the operation device 26, that is, the pilot pressure corresponding to the operating state of the respective operating elements (hydraulic actuators) in the operation device 26. A pilot pressure detection signal corresponding to an operational state of elements such as the lower traveling structure 1, the upper turning structure 3, the boom 4, the arm 5, the bucket 6, and the like in the operation device 26 by the operation pressure sensor 15a is loaded into the controller 30.

The display device 40 is connected to the controller 30 and is provided in a readily visible position from a seated operator within the cabin 10 under the control of the controller 30 to display various information images. The display device 40 may be, for example, a liquid crystal display, an organic electroluminescent (EL) display, or the like.

The input device 42 is positioned within reach of a seated operator in the cabin 10 to receive various operations by the operator and output signals corresponding to the operation contents. For example, the input device 42 is integrated with the display device 40. The input device 42 may be provided separately from the display device 40. The input device 42 includes a touch panel mounted on a display of the display device 40, a knob switch mounted on the tip of a lever included in the operation device 26, a button switch mounted around the display device 40, a lever, a toggle, or the like. A signal corresponding to the operation contents for the input device 42 is loaded into the controller 30.

An imaging device 80 captures the periphery of shovel 100. The imaging device 80 includes a camera 80F that captures the front side of shovel 100, a camera 80L that captures the left side of shovel 100, a camera 80R that captures the right side of shovel 100, and a camera 80B that captures the rear side of shovel 100.

The camera 80F is mounted, for example, on the ceiling of the cabin 10, that is, inside the cabin 10. The camera 80F may also be attached to the exterior of the cabin 10, such as the roof of the cabin 10, the sides of the boom 4, or the like. The camera 80L is mounted on the upper left end of the upper turning structure 3, the camera 80R is mounted on the upper right end of the upper turning structure 3, and the camera 80B is mounted on the upper rear end of the upper turning structure 3.

The imaging device 80 (cameras 80F, 80B, 80L, 80R) is, for example, a monocular wide-angle camera having a very wide field angle. The imaging device 80 may be a stereo camera, a distance image camera, or the like. Captured images ("peripheral images") around the shovel 100 by the imaging device 80 are loaded into the controller 30.

The state detecting device S1 outputs detection information regarding various states of the shovel 100. The detection information output from the state detecting device S1 is loaded into the controller 30.

For example, the state detecting device S1 detects a posture state or an operation state of an attachment. Specifically, the state detecting device S1 may detect the elevation angle of the boom 4, the arm 5, and the bucket 6 (hereinafter, "boom angle," "arm angle," and "bucket angle," respectively). That is, the state detecting device S1 may include boom angle sensors, arm angle sensors, and bucket angle sensors that detect boom angle, arm angle, and bucket angle, respectively. The state detecting device S1 may detect an acceleration, angular acceleration, or the like of the boom 4, the arm 5, and the bucket 6. In this case, the state detecting device S1 may include, for example, a rotary encoder, an acceleration sensor, an angular acceleration sensor, a 6-axis sensor, an IMU (Inertial Measurement Unit) mounted to each of the boom 4, arm 5, and bucket 6, and the like. The state detecting device S1 may include a boom cylinder 7, an arm cylinder 8, and a cylinder sensor for detecting the position, speed, acceleration, and the like of the cylinder of the bucket cylinder 9 that drives the boom 4, the arm 5, and the bucket 6, respectively.

For example, the state detecting device S1 detects the posture of the machine, that is, the lower traveling structure 1 and the upper turning structure 3. Specifically, the state detecting device S1 may detect a tilted state of the machine with respect to a horizontal plane. In this case, the state detecting device S1 may include, for example, a tilt sensor mounted to the upper turning structure 3 and detecting a tilt angle about the twin axes of the upper turning structure 3 in a longitudinal direction and a lateral direction (hereinafter referred to as "forward and backward tilt angles" and "left and right tilt angles").

For example, the state detecting device S1 detects the turning state of the upper turning structure 3. Specifically, the state detecting device S1 detects the turning angle speed and the turning angle of the upper turning structure 3. In this case, the state detecting device S1 may include, for example, a gyro sensor, a resolver, a rotary encoder, or the like attached to the upper turning structure 3. That is, the state detecting device S1 may include a turning angle sensor for detecting the turning angle or the like of the upper turning structure 3.

For example, the state detecting device S1 detects the working condition of a force acting on the shovel 100 through an attachment. Specifically, the state detecting device S1 may detect the operating pressure (cylinder pressure) of the hydraulic actuator. In this case, the state detecting device S1 may include a pressure sensor for detecting the pressure in the rod-side oil chamber and bottom-side oil chamber of each of the boom cylinder 7, the arm cylinder 8, and the bucket cylinder 9.

For example, the state detecting device S1 may include a sensor for detecting the displacement of a control valve spool within the control valve 17. Specifically, the state detecting device S1 may include a boom spool displacement sensor for detecting displacement of the boom spool. The state detecting device S1 may also include an arm spool displacement sensor for detecting displacement of the arm spool. The state detecting device S1 may also include a bucket spool displacement sensor for detecting displacement of the bucket spool. The state detecting device S1 may also include a turning spool displacement sensor for detecting displacement of the turning spool. The state detecting device S1 may also include a right-traveling spool displacement sensor and a left-traveling spool displacement sensor for detecting displacement of the right-traveling spool and the left-traveling spool constituting the right-traveling control valve and the left-traveling control valve, respectively.

For example, the state detecting device S1 detects the position of the shovel 100 and the orientation of the upper turning structure 3. In this case, the state detecting device S1 may include, for example, a Global Navigation Satellite System (GNSS) compass, a GNSS sensor, an orientation sensor, or the like attached to the upper turning structure 3.

A communication device T1 communicates with an external device through the communication network NW. The communication device T1 is, for example, a mobile communication module corresponding to a mobile communication standard such as Long Term Evolution (LTE), 4th Generation (4G), and 5th Generation (5G), or a satellite communication module for connecting to a satellite communication network.

The information transmitting unit 301 transmits the work pattern performance information and the environmental condition performance information during a predetermined type of work of the shovel 100 to the management device 300 through the communication device T1. The work pattern performance information transmitted by the information transmitting unit 301 includes various detection information input from the state detecting device S1, for example. The environmental condition performance information transmitted by the information transmitting unit 301 includes, for example, a peripheral image of the shovel 100 input from the imaging device 80. The environmental condition performance information transmitted by the information transmitting unit 301 may include information regarding the internal environmental condition of the shovel 100, for example, the variable specification, such as the high-capacity bucket specification, the long arm specification, and the quick coupling specification.

The information transmitted from the information transmitting unit 301 may include operator information (worker information). Further, the information transmitting unit 301 may transmit the work date and time, the model number of the shovel 100, operator information, various detecting information, the work experience information, or the like in association with each other.

For example, the information transmitting unit 301 sequentially determines whether or not a predetermined target type work is being performed, and when it is determined that the target type work is being performed, the information transmitting unit 301 associates the work pattern performance information (that is, various detection information input from the state detecting device S1) and the environmental condition performance information (that is, a peripheral image of the shovel 100 input from the imaging device 80) during the period when the work is being performed and records them in the internal memory or the like. At this time, the date and time information concerning the start and end of the work of the subject type and the position information of the shovel 100 at the time of the work may be stored in the internal memory in a manner that is further mapped to a set of work pattern performance information and environmental condition performance information. In this case, the datetime information may be obtained, for example, from a predetermined timing configuration Real Time Clock (RTC) within the controller 30. The information transmitting unit 301 transmits a set of the recorded work pattern performance information and the environmental condition performance information to the management device 300 through the communication device T1 at a predetermined timing such as when the shovel 100 is turned off with the key (stopped). The information transmitting unit 301 may transmit a set of the recorded work pattern performance information and the environmental condition performance information to the management device 300 through the communication device T1 every time a work of a target type is performed.

The environmental condition performance information may include detection information detected by other sensors mounted on the shovel 100 in place of or in addition to the imaging device 80. For example, the shovel 100 may include other sensors, such as a millimeter wave radar, Light Detecting and Ranging (LIDAR), and the environmental condition performance information may include detection information for these distance sensors. The same shall apply to the current environmental condition information described below. The actual environmental condition information may also include weather information. The weather information may include, for example, detection information such as a rain drop sensing sensor, an illumination intensity sensor, or the like that may be included in the state detecting device S1. The information transmitting unit 301 may transmit only the work pattern performance information to the management device 300. The information transmitting unit 301 may sequentially upload the detection information of the state detecting device S1 or the peripheral image of the shovel 100 by the imaging device 80 to the management device 300 through the communication device T1. In this case, the management device 300 may extract the information when the work of the target type is performed from the information uploaded from the shovel 100 and generate the work pattern performance information and the environmental information.

The work pattern acquisition unit 302 acquires the optimum work pattern (the optimum work pattern) for the current environmental condition of the predetermined target index from the management device 300 when a predetermined type of work is performed. For example, the work pattern acquisition unit 302 transmits a signal (acquisition request signal) requesting the acquisition of a work pattern including information on the current environmental condition of the shovel 100 (hereinafter, referred to as "current environmental condition information") to the management device 300 through the communication device T1 in accordance with a predetermined operation (hereinafter, referred to as "acquisition request operation") by an operator on the input device 42.

This allows the management device 300 to provide the shovel 100 with the optimum work pattern to suit the current environmental conditions of the shovel 100. The current environmental condition information includes, for example, the latest peripheral image of the shovel 100 by the imaging device 80. The current environmental condition information may also include information about the internal environmental conditions of the shovel 100, for example, variable specifications such as high capacity bucket specifications, long arm specifications, quick coupling specifications, and the like. The current environmental condition information may include detection information, that is, weather information, such as a rain drop sensing sensor or an illumination intensity sensor, which may be included in the state detecting device S1. The work pattern acquisition unit 302 acquires information concerning the work pattern that is transmitted from the management device 300 in response to the acquisition request signal and is received by the communication device T1.

The machine guidance unit 303 controls the machine guidance function and the machine control function. That is, the machine guidance unit 303 assists the operator in operating the various operating elements (attachments including the lower traveling structure 1, the upper turning structure 3, and the boom 4, arm 5, and bucket 6) through the operation device 26.

For example, the machine guidance unit 303 may automatically operate at least one of the boom 4 and the bucket 6 so that the predetermined target design plane (hereinafter simply "design plane") coincides with the tip of the bucket 6 (e.g., the claw or the back surface) when the operation of the arm 5 is performed by the operator through the operation device 26. In addition, the machine guidance unit 303 may automatically operate the arm 5 regardless of the operation state of the operation device 26 which operates the arm 5. That is, the machine guidance unit 303 may trigger an operator's operation of the operation device 26 to cause an attachment to perform a predetermined operation.

More specifically, the machine guidance unit 303 acquires various information from the state detecting device S1, the imaging device 80, the communication device T1, and the input device 42. The machine guidance unit 303 calculates the distance between the bucket 6 and the design plane, for example, based on the acquired information. The machine guidance unit 303 can automatically operate the hydraulic actuators by appropriately controlling the operation valve 31 according to the distance between the calculated bucket 6 and the design plane and adjusting the pilot pressure acting on the control valve corresponding to the hydraulic actuator individually and automatically. The operation valve 31 includes, for example, a boom proportional valve corresponding to the boom 4 (boom cylinder 7). The operation valve 31 includes, for example, an arm proportional valve corresponding to the arm 5 (arm cylinder 8). The operation valve 31 includes, for example, a bucket proportional valve corresponding to the bucket 6 (bucket cylinder 9). The operation valve 31 includes, for example, a turning proportional valve corresponding to the upper turning structure 3 (turning hydraulic motor 2A). The operation valve 31 includes, for example, a right-traveling proportional valve and a left-traveling proportional valve corresponding to the right-side crawler and the left-side crawler of the lower traveling structure 1.

The machine guidance unit 303 may, for example, automatically expand or contract at least one of the boom cylinder 7, the arm cylinder 8, and the bucket cylinder 9, depending on the opening and closing operation of the arm 5 relative to the operation device 26 to assist in the drilling operation. The excavation work is the work of excavating the ground along the design plane with the claw of the bucket 6. The machine guidance unit 303 automatically expands and contracts at least one of the boom cylinder 7 and the bucket cylinder 9, for example, when an operator manually operates the arm 5 in the closing direction (hereinafter, "arm closing operation") with respect to the operation device 26.

The machine guidance unit 303 may also automatically expand or contract at least one of the boom cylinder 7, the arm cylinder 8, and the bucket cylinder 9 to assist in finishing, for example, the slope or horizontal surface. Finishing operations include, for example, pulling the bucket 6 forward along the design plane while holding the back side of the bucket 6 against the ground. The machine guidance unit 303 automatically expands and contracts at least one of the boom cylinder 7 and the bucket cylinder 9, for example, when an operator manually closes the arm relative to the operation device 26. This allows the bucket 6 to be moved along the design plane that is the slope or horizontal plane after completion while pressing the back surface of the bucket 6 against the pre-completion slope (slope surface) or horizontal surface with a predetermined pressing force.

The machine guidance unit 303 may automatically rotate the turning hydraulic motor 2A to make the upper turning structure 3 directly face the design plane. In this case, the machine guidance unit 303 may operate a predetermined switch included in the input device 42 so that the upper turning structure 3 is opposed to the design plane. The machine guidance unit 303 may also have the upper turning structure 3 opposed to the design plane and initiate the machine control function only when a predetermined switch is operated.

For example, when a predetermined type of work (for example, excavation work, loading work, finishing work, and the like) is performed, the machine guidance unit 303 controls the operation of at least a part of the attachment, the upper turning structure 3, and the lower traveling structure 1 in accordance with the operation by the operator to the operation device 26 in accordance with the work pattern (the optimum work pattern) acquired by the work pattern acquisition unit 302. This allows the operator to adjust the operation of the shovel 100 to a predetermined target index, for example, an optimum work pattern for the environmental conditions of the current shovel 100 output from the management device 300 so that the evaluation of the speed of the work is relatively high, regardless of the degree of skill with which the shovel 100 is operated.

The machine guidance unit 303 may also allow an operator to display on the display device 40 the operation of the shovel 100 corresponding to the optimum operation pattern while controlling the operation of the shovel 100 based on the optimum operation pattern. For example, when the operation of the shovel 100 is controlled based on the optimum operation pattern, the machine guidance unit 303 displays the moving image of the simulation results corresponding to the optimum operation pattern on the display device 40. Accordingly, the operator can proceed with the work while checking the contents of the actual work pattern with the moving image of the display device 40.

The management device 300 according to the present embodiment includes a worker information storage unit 310, a desired condition information storage unit 320, a skill evaluation information storage unit 330, a qualification information storage unit 340, a search processing unit 350, and a skill evaluation unit 360.

The worker information storage unit 310 stores information about the worker. The desired condition information storage unit 320 stores information representing the desired condition regarding the employment of each worker. The skill evaluation information storage unit 330 stores information representing the result of the skill evaluation for each worker. The qualification information storage unit 340 stores information representing a relationship between the type of work using the shovel 100 and the qualification related to the shovel. Details of each storage unit will be described later.

Each storage unit illustrated in FIG. 2 may be a single storage unit 305. In other words, the storage unit 305 includes the worker information storage unit 310, the desired condition information storage unit 320, the skill evaluation information storage unit 330, and the qualification information storage unit 340.

When the search condition and the search request are received from the contractor's terminal device 500, the search processing unit 350 identifies a worker who satisfies the search condition with reference to the desired condition information storage unit 320 and the skill evaluation information storage unit 330, and transmits the specified result to the contractor's terminal device 500. The search conditions of the embodiment may be the recruitment guidelines for workers determined by the contractor.

When the search processing unit 350 receives the information from the worker's terminal device such as the worker's information or the desired conditions related to the work, the search processing unit 350 stores the received information in the worker information storage unit 310 and the desired condition information storage unit 320.

When the skill evaluation unit 360 acquires the work pattern performance information and the environmental conditions performance information from the shovel 100, the skill evaluation unit 360 generates the skill evaluation information representing the results of the skill evaluation for each worker based on the acquired work pattern performance information and the environmental conditions performance information, and stores the information in the skill evaluation information storage unit 330.

In the example of FIG. 2, although the worker information storage unit 310, the desired condition information storage unit 320, the skill evaluation information storage unit 330, and the qualification information storage unit 340 are disposed in the management device 300. However, these are not limited thereto. Each of the storage units described above may be provided in an external device, some or all of which is capable of communicating with the management device 300.

In the example of FIG. 2, the skill evaluation unit 360 is provided in the management device 300, but is not limited thereto. The skill evaluation unit 360 may be provided, for example, in the controller 30 of the shovel 100 to be described later. In this case, the skill evaluation unit 360 generates the skill evaluation information for each worker and transmits the skill evaluation information to the management device 300 instead of the work pattern performance information and the environmental condition performance information.

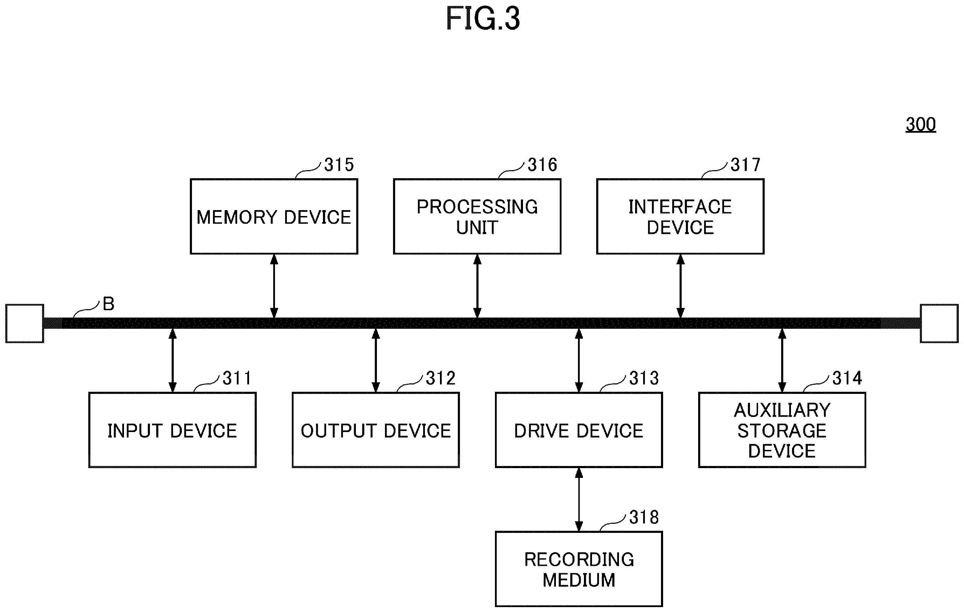

Hereinafter, the management device 300 according to the present embodiment will be described. FIG. 3 is a diagram illustrating an example of a hardware configuration of the management device according to an embodiment.

The management device 300 according to the present embodiment is a computer including an input device 311, an output device 312, a drive device 313, an auxiliary storage device 314, a memory device 315, a processing unit 316, and an interface device 317, each of which is interconnected by a Bus B.

The input device 311 is a device for inputting various kinds of information and is realized by, for example, a keyboard or a pointing device. The output device 312 is for outputting various kinds of information and is realized by, for example, a display. The interface device 317 includes a LAN card or the like and is used to connect to the network.

The selection program for implementing the search processing unit 350 and the skill evaluation program for implementing the skill evaluation unit 360 are at least part of various programs for controlling the management device 300. Selection programs and skill evaluation programs may be provided, for example, by distribution of a recording medium 318 or by downloading them from a network. The recording medium 318, which records the selection program and the skill evaluation program, may use various types of storage media, such as CD-ROMs, flexible disks, magneto-optical disks and the like, storage media which optically, electrically or magnetically records information, semiconductor memories which electrically record information, such as ROMs, flash memories, and the like.

The selection program and the skill evaluation program are installed in the auxiliary storage device 314 from the recording medium 318 via the drive device 313 when the recording medium 318 having these programs is set in the drive device 313. The selection and skill programs downloaded from the network are installed on the auxiliary storage device 314 via the interface device 317.

The auxiliary storage device 314 realizes each storage unit and the like of the management device 300. The auxiliary storage device 314 stores a selection program and a skill evaluation program installed in the management device 300, and stores various necessary files and data by the management device 300. The memory device 315 reads out the communication control program from the auxiliary storage device 314 and stores the program at the start of the management device 300. The processing unit 316 realizes various processes as described below in accordance with a selection program and a skill evaluation program stored in the memory device 315.

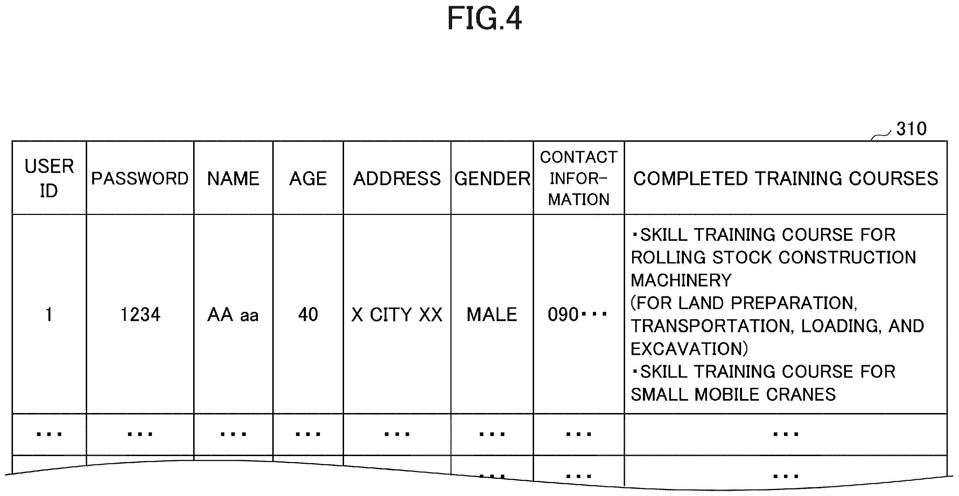

Next, each storage unit of the management device 300 according to the present embodiment will be described with reference to FIGS. 4 to 7. Each storage unit of the management device 300 may be provided in, for example, the auxiliary storage device 314 or the memory device 315.

FIG. 4 is a diagram illustrating an example of a worker information storage unit of the embodiment. The worker information storage unit 310 of the present embodiment stores information of the worker input by the worker in the worker's terminal device 400. In the following description, the information stored in the worker information storage unit 310 is called the worker information.

The worker information in the present embodiment includes user ID, password, name, age, address, gender, contact details, completed training courses, etc. as items of information.

In the worker information storage unit 310, an item "user ID" is associated with other items. The value of the item "User ID" is identification information that identifies the worker. Therefore, the value of the item "User ID" is synonymous with the worker ID to identify the worker.

The value of the item "Password" is the password entered when a worker logs into the management system SYS. Values for "Name", "Age", "Address", "Gender" and "Contact information" indicate the name, age, address, gender, and contact information of the worker.

The value of the item "Completed training course" indicates the course completed by the worker. Work with the shovel 100 includes work that can be performed only by workers who have completed the specified training. Therefore, the value of the item "Completed Training Course" is also an indication of the type of work that can be done by the worker.

In the example illustrated in FIG. 4, the worker of the user ID "1" completed the "Skill Training Course for Rolling Stock Construction Machinery (for land preparation, transportation, loading, and excavating)" and the "Skill Training Course for Small Mobile Cranes". In other words, it can be seen that the worker of the user ID "1" is qualified to carry out the work which is required to complete the "Skill Training Course for Rolling Stock Construction Machinery (for land preparation, transportation, loading, and excavating)" and the "Skill Training Course for Small Mobile Cranes".

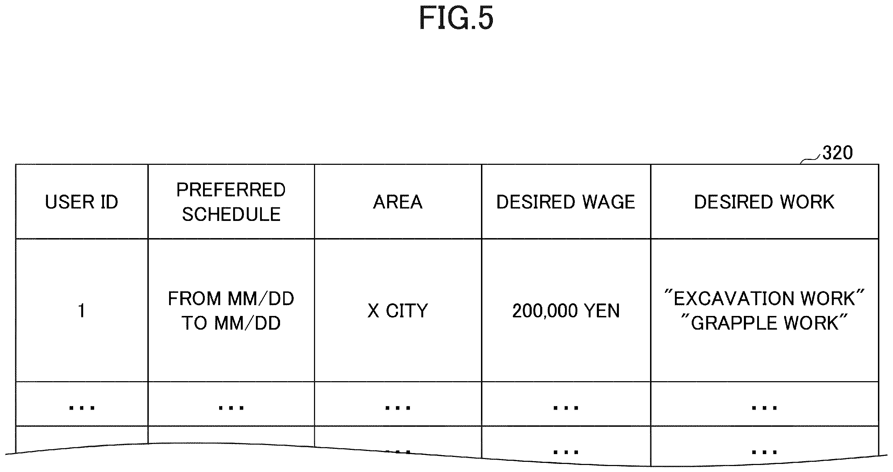

FIG. 5 is a diagram illustrating an example of a desired condition information storage unit of an embodiment. The desired condition information storage unit 320 of the present embodiment stores information representing the desired condition regarding the work input by the worker in the worker's terminal device 400. In the following description, the information stored in the desired condition information storage unit 320 is called the desired condition information.

The desired condition information of the present embodiment includes a user ID, a preferred date, an area, a desired wage, and a desired work type as items of information. In the desired condition information storage unit 320, the item "user ID" is associated with other items.

The value of the item "Preferred date" indicates the schedule on which the worker wishes to work, and the value of the item "Area" indicates the area in which the worker wishes to work.

The value of the item "Desired wage" indicates the wage desired by the worker, and the value of the item "Type of work" indicates the type of work of the shovel 100 desired by the worker.

In the example of FIG. 5, it can be seen that the worker of the user ID "1" wishes to work at a site where "Excavation work" and "Grapple work" is to be performed in the period from MM/DD to MM/DD in x city.

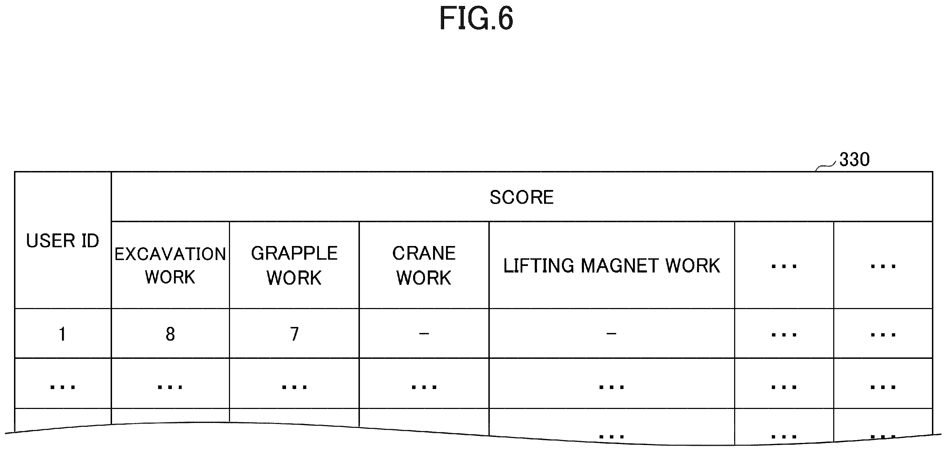

FIG. 6 is a diagram illustrating an example of a skill evaluation information storage unit of an embodiment. The skill evaluation information storage unit 330 of the present embodiment stores the skill evaluation information for each worker generated by the skill evaluation unit 360 based on the work pattern performance information and the environmental condition performance information. The details of the process of generating the skill evaluation information by the skill evaluation unit 360 are described below.

In the present embodiment, the skill evaluation information of the worker who operated the shovel 100 is updated each time the skill evaluation unit 360 acquires the work pattern performance information and the environmental condition performance information from the shovel 100.

The skill evaluation information of the present embodiment has a user ID and a score as items of information, and both are associated. The item "Score" is associated with the work type of the shovel 100. Specifically, the item "Score" corresponds to the type of work performed by the shovel 100, such as excavation work, grapple work, crane work, lifting magnet work, and the like.

The value of the item "Score" indicates the result of the skill evaluation of the worker by type of work. In other words, the item "Score" value is an index indicating a level of operating skill is for each work type with the shovel 100 by a worker.

In the present embodiment, a higher item "Score" value indicates a higher operating skill for the corresponding work type. In the example of FIG. 6, the score of the user ID "1" is associated with the excavation work and the grapple work. Accordingly, in the example of FIG. 6, it can be seen that the worker of the user ID "1" does not operate the work types other than the above two work types, and the skills for the work types other than the above two are not evaluated.

In the example of FIG. 6, the score of the "Excavation work" is "8" and the score of the "Grapple work" is "7". Accordingly, it can be seen that the worker of user ID "1" has high operational skills in both excavation work and grapple work.

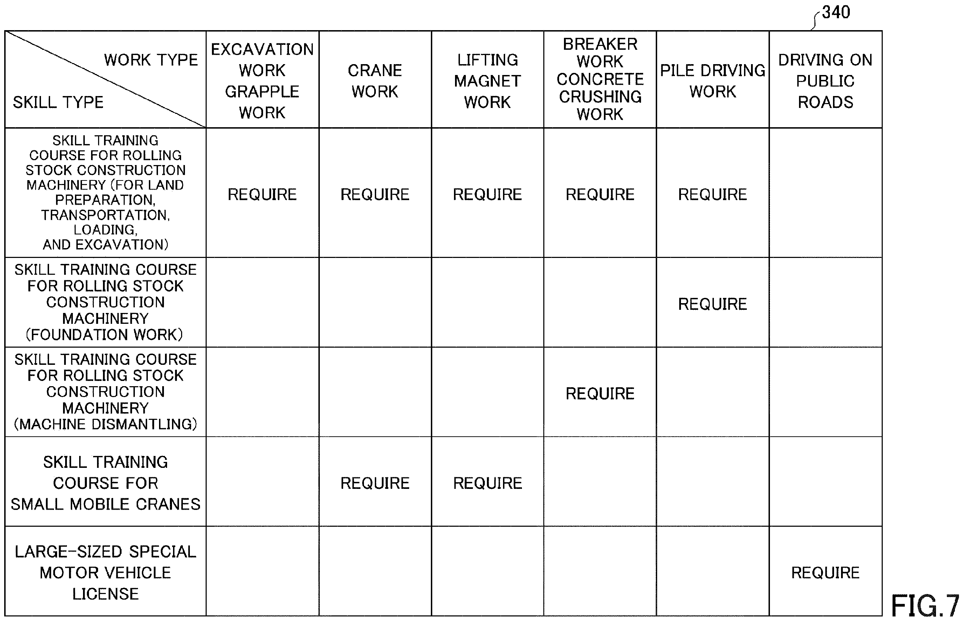

FIG. 7 is a diagram illustrating an example of a qualification information storage unit of an embodiment. The qualification information storage unit 340 of the present embodiment may be previously stored in the management device 300. The qualification information storage unit 340 stores the qualification information. The qualification information corresponds to the type of work performed by the shovel 100 and the training required to complete in order to perform the work indicated by the type of work, and includes the contents concerning the provision of Article 61, Paragraph 1 of the Industrial Safety and Health Law in Japan.

Specifically, the qualification information illustrated in FIG. 7 indicates that the worker must have completed the "Skill training course for rolling stock construction machinery (for land preparation, transportation, loading, and excavation)" in order to perform the "Excavation work" or "Grapple work" using the shovel 100.

In addition, the qualification information indicates that workers must have completed the "Skill training course for rolling stock construction machinery (For land preparation, transportation, loading, and excavation)" and the "Skill training course for small mobile cranes" in order to perform "Crane work" or "lifting magnet work" using the shovel 100. In addition, the qualification information indicates that workers must complete the "Skill training course for rolling stock construction machinery (For land preparation, transportation, loading, and excavation)" and the "Skill training course for rolling stock construction machinery (Machine dismantling)" in order to perform the Breaker work" or "Concrete crushing work" using the shovel 100. In addition, the qualification information indicates that workers must have completed the "Skill training course for rolling stock construction machinery (For land preparation, transportation, loading, and excavation)" and the "Skill training course for rolling stock construction machinery (Foundation work)" in order to perform the "Piling driving work" using the shovel 100. In addition, the qualification information indicates that workers must have a "Large-sized special motor vehicle license" in order to drive the shovel 100 on public roads (except when the worker has applied for road use).

In the present embodiment, the excavation work refers to work performed using the shovel 100 with the bucket 6 as an end attachment attached on the end of the attachment. The grapple work refers to work performed using the shovel 100 with a grapple as an end attachment attached to the end of the attachment. The crane work refers to work performed using the shovel 100 with the hook stored between the two-bucket links pulled out.

The lifting magnet work refers to work performed using the shovel 100 with a lifting magnet as an end attachment attached to the end of the attachment. The breaker work refers to work performed using the shovel 100 with a breaker attached as an end attachment. The concrete crushing work refers to work performed using the shovel 100 as a concrete crushing machine to which a scissor-shaped dismantling attachment as an end attachment is attached. The dismantling attachment may be an attachment with a function to cut the reinforcing steel bar. The pile driving work refers to work performed using the shovel 100 to which the pile driving attachment is attached as an end attachment.

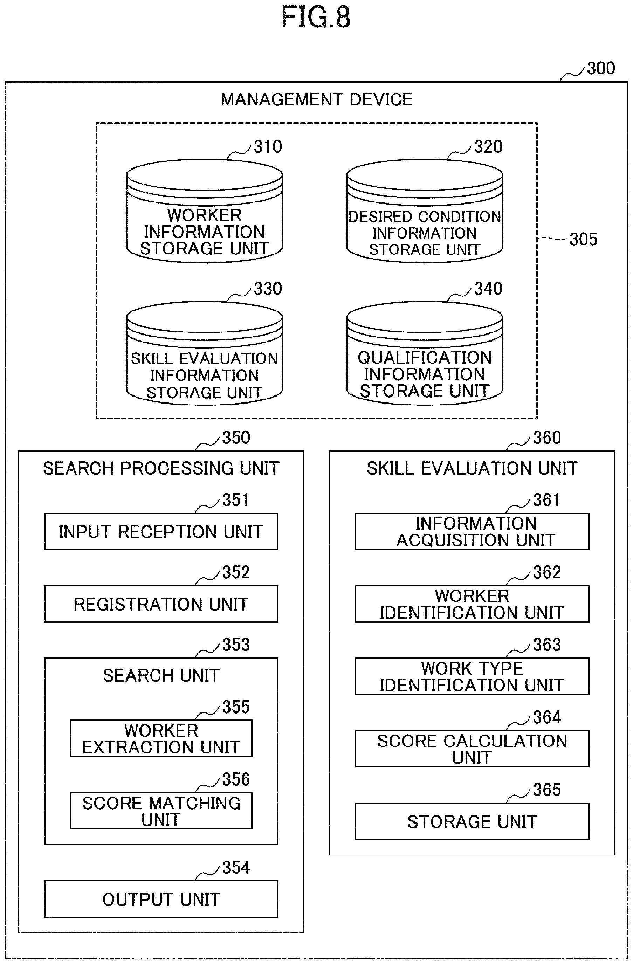

Next, the function of the management device 300 of the present embodiment will be described with reference to FIG. 8. FIG. 8 is a diagram illustrating the function of the management device of the embodiment.

The search processing unit 350 of the management device 300 of the present embodiment includes an input reception unit 351, a registration unit 352, a search unit 353, and an output unit 354.

The input reception unit 351 receives various inputs to the management device 300. Specifically, the input reception unit 351 receives the worker information and the desired condition information from the worker's terminal device 400 and receives the worker search condition input from the contractor's terminal device 500.

The registration unit 352 stores various information received by the input reception unit 351 in the corresponding storage unit. Specifically, the registration unit 352 stores the worker information in the worker information storage unit 310 and stores the desired condition information in the desired condition information storage unit 320.

When the input reception unit 351 receives the input of the search condition from the contractor's terminal device 500, the search unit 353 references a worker who falls under the search condition with reference to the desired condition information storage unit 320 and the skill evaluation information storage unit 330. The details of the search unit 353 will be described later.

The output unit 354 outputs (transmits) various information to be displayed on the worker's terminal device 400 or the contractor's terminal device 500.

Hereinafter, the search unit 353 will be described. The search unit 353 of the present embodiment has a worker extraction unit 355 and a score matching unit 356.

The worker extraction unit 355 identifies, among the workers in whom the worker information is stored in the worker information storage unit 310, the worker whose desired condition matches the search condition. In addition, the worker extraction unit 355 extracts the worker's information according to the result of the checking by the score matching unit 356.

The score matching unit 356 references the skill evaluation information storage unit 330 and matches the specified worker with the score included in the corresponding skill evaluation information with the required score included in the search conditions.

In the present embodiment, for example, the worker extraction unit 355 may extract the specified worker information if the score corresponding to the desired work type in the skill evaluation information is greater than the required score included in the search condition.

Next, a skill evaluation unit 360 will be described. The skill evaluation unit 360 of the present embodiment includes an information acquisition unit 361, a worker identification unit 362, a work type identification unit 363, a score calculation unit 364, and a storage unit 365.

The information acquisition unit 361 acquires the work pattern performance information and the environmental condition performance information transmitted from the shovel 100.

The worker Identification unit 362 identifies the worker corresponding to the work pattern performance information and the environmental condition performance information. In other words, the worker identification unit 362 identifies the worker who was operating the shovel 100 when the shovel 100 acquired the work pattern performance information and the environmental condition performance information.

The work type identification unit 363 identifies the work type that has been performed by the shovel 100 based on the work pattern performance information and the environmental condition performance information.

The score calculation unit 364 calculates an index indicating the high level of operating skill of the shovel 100 for the worker based on the work pattern performance information and the environmental condition performance information. In other words, the score calculation unit 364 is an index calculating unit which calculates an index indicating a high level of operating skill of the shovel 100 of the worker.

The storage unit 365 associates the user ID corresponding to the worker specified by the worker identification unit 362, the work type specified by the work type identification unit 363, and the score calculated by the score calculation unit 364 as the skill evaluation information and stores the associated information in the skill evaluation information storage unit 330.

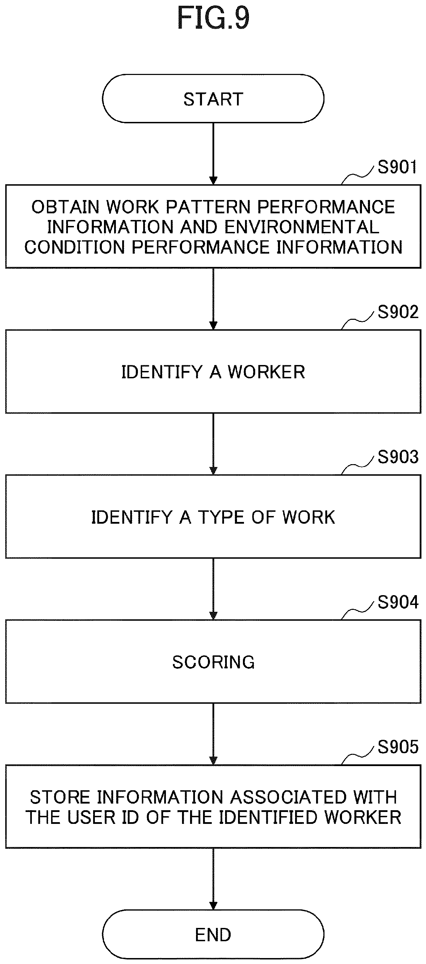

Hereinafter, a process of the skill evaluation unit 360 of the present embodiment will be described with reference to FIG. 9. FIG. 9 is a flowchart illustrating a process of the skill evaluation unit of the present embodiment.

In step S901, the skill evaluation unit 360 of the present embodiment acquires the work pattern performance information and the environmental condition performance information from the shovel 100 by the information acquisition unit 361.

The work pattern performance information and the environmental condition performance information may be transmitted from the shovel 100 at a time when the shovel 100 is keyed off (stopped). Further, the work pattern performance information and the environmental condition performance information may be transmitted from the shovel 100 whenever a worker who operates the shovel 100 changes, the previously acquired work pattern performance information and the environmental condition performance information.

Subsequently, in step S902, the skill evaluation unit 360 identifies a worker corresponding to the work pattern performance information and the environmental condition performance information by the worker identification unit 362.

Specifically, the worker identification unit 362 may, for example, capture a face image of a worker on the cabin 10 by a camera installed in the cabin 10 and identify the worker by face authentication or the like. In this case, the face image of the worker may be stored in the worker information storage unit 310 as part of the worker information.

It should be noted that the identification of the workers may be performed on the shovel 100. For example, in the display device 40 of the shovel 100, when the user ID is entered by the worker, the shovel 100 identifies the worker. Identification of the worker may also be accomplished, for example, by reference by the terminal device 400. Thus, the shovel 100 may have the function of the worker identification unit 362 (operator specifying portion).

Subsequently, in step S903, the skill evaluation unit 360 specifies the work type of the shovel 100 by the work type identification unit 363.

The work type identification unit 363 of the present embodiment identifies the work type of the shovel 100 based on the detection information of various sensors representing the performance of the work pattern included in the work pattern performance information and the environmental condition performance information, the posture state and the operation state of the attachment, and the like.

Subsequently, in step S904, the skill evaluation unit 360 calculates a score, which is an indicator of the high skill of the worker, from the work pattern performance information and the environmental condition performance information by the score calculation unit 364.

Specifically, for example, the score calculation unit 364 may calculate the score using the operation time of the shovel 100, the fuel consumed, the travel distance of the shovel 100, or the like obtained from the work pattern performance information and the environmental condition performance information. The score calculation unit 364 may be weighted for each item of information used in the computation of the score so that, for example, a shorter operation time and smaller fuel consumption results in a higher score.

The score calculation unit 364 may calculate the score based on a work efficiency as a ratio of the work amount and the work time, a fuel efficiency as a ratio of the amount of fuel used and the work time, and an actual work efficiency as a ratio of the actual work hours (hours excluding the pause time from the work hours) and the work hours. In addition, the score may be calculated for each work type.

Subsequently, in step S905, the skill evaluation unit 360 associates the user ID of the identified worker, the identified work type, and the calculated score by the storage unit 365 with one another and stores them in the skill evaluation information storage unit 330.

In the present embodiment, as described above, the skill evaluation information for each worker is generated. The skill evaluation information of the present embodiment is generated whenever the information acquisition unit 361 acquires the work pattern performance information and the environmental condition performance information from the shovel 100 and is overwritten by the skill evaluation information storage unit 330.

Therefore, the skill evaluation information stored in the skill evaluation information storage unit 330 is information that reflects the skill acquired by the worker through daily work.

The processing by the skill evaluation unit 360 of the present embodiment may be realized by, for example, artificial intelligence and the like. In this case, the skill evaluation unit 360 may input the work pattern performance information, the environmental condition performance information, and the user ID of the worker. The skill evaluation unit 360 may then output the optimum value as an indicator of the worker's skill for each work type.

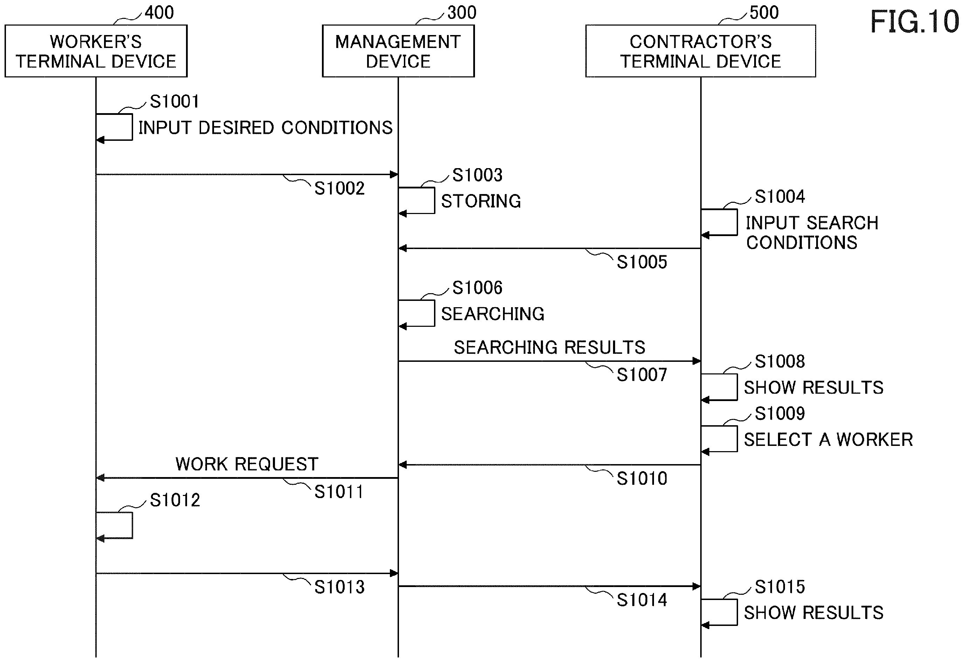

Next, an operation of the management device 300 of the present embodiment will be described with reference to FIG. 10. FIG. 10 is a sequence diagram illustrating operations of the management device, the worker's terminal device, and the contractor's terminal device of the present embodiment.

In the management device 300 of the present embodiment, before the operation described in FIG. 10 is performed, the input screen of the worker information is displayed on the worker's terminal device 400, the worker information input by the worker's terminal device 400 is received, and the information is stored in the worker information storage unit 310.

In the present embodiment, the worker's terminal device 400 displays the input screen of the desired condition and receives the input of the desired condition (step S1001). Subsequently, in step S1002, the worker's terminal device 400 transmits the desired condition information representing the desired condition to the management device 300.

In step S1003, when the input reception unit 351 of the search processing unit 350 receives the input of the desired condition information, the management device 300 stores the desired condition information in the desired condition information storage unit 320 by the registration unit 352.

The operations up to step S1003 may be performed in advance before the operations of step S1004 or later described below.

In step S1004, the contractor's terminal device of the present embodiment displays the input screen of the search condition and receives the input of the search condition.

The search conditions specifically include work schedule, area, qualification, type of work, score, and the like. The qualification included in the search conditions refers to the training required to be completed.

Subsequently, in step S1005, the contractor's terminal device 500 transmits the search condition information representing the input search condition to the management device 300.

In step S1006, when the input reception unit 351 receives the input of the search condition information, the management device 300 performs a search by the search unit 353. The details of the processing of the search unit 353 will be described later.

Subsequently, in step S1007, the management device 300 transmits the search result by the search unit 353 to the contractor's terminal device 500. The search result by the search unit 353 may be, for example, a list of the worker information extracted from the worker information storage unit 310.

In step S1010, the contractor's terminal device 500 displays the search result (step S1008) and transmits information indicating the selected worker to the management device 300 when the selection of the worker requesting the work is received (step S1009). In other words, the contractor's terminal device 500 notifies the management device 300 of a request to transmit a work request to the worker.

In step S1011, the management device 300 displays a screen indicating that a work request has been received by the selected worker's terminal device 400 when information indicating the selected worker is received by the output unit 354.

In step S1013, when an operation indicating the acceptance or rejection of a work request is received in the screen displayed in step S1011 (step S1012), the worker's terminal device 400 transmits a response corresponding to the received operation to the management device 300.

In step S1014, the management device 300 transmits the contents of the response to the contractor's terminal device 500 by the output unit 354 when the response is received from the worker's terminal device 400. In step S1015, the contractor's terminal device 500 displays a result screen indicating the status of acceptance of the work request by the worker in response to the received response.

It should be noted that the screen displayed in the worker's terminal device 400 and the contractor's terminal device 500 of the present embodiment may be displayed by a browser or the like possessed by each terminal according to an instruction from the management device 300.

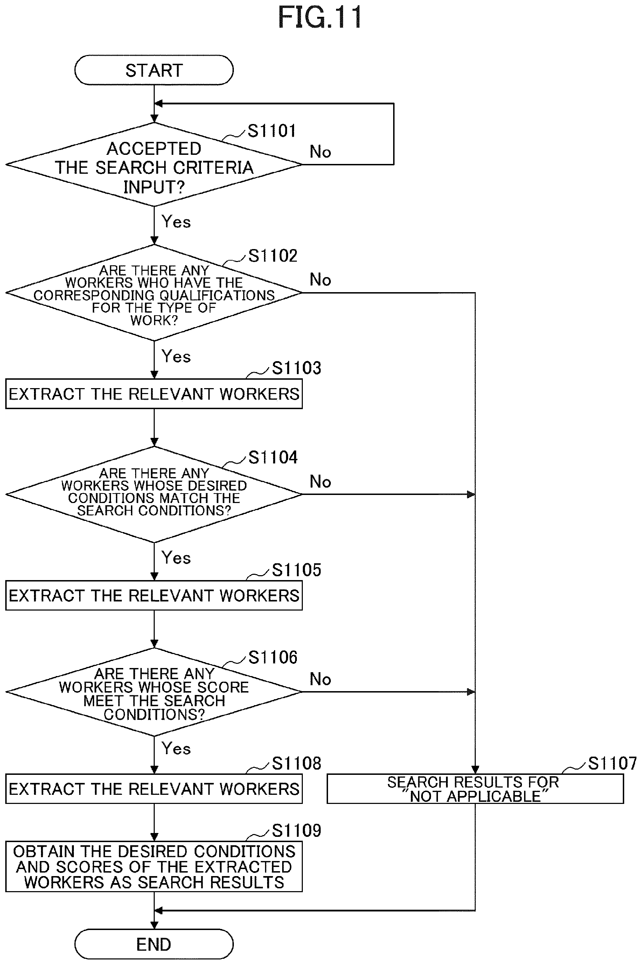

Next, the processing of the search unit 353 of the present embodiment will be described with reference to FIG. 11. FIG. 11 is a flowchart illustrating processing of a search unit of the present embodiment. The processing of FIG. 11 indicates the details of step S1006 of FIG. 10.

In step S1101, the search unit 353 of the present embodiment determines whether or not the input of the search condition information is received by the input reception unit 351. In step S1101, when the input is not received, the search unit 353 waits until the input of the search condition information is received.

When the input of the search condition information is received in step S1101, the search unit 353 refers to the worker information storage unit 310 and determines whether or not there is a worker who holds the qualification included in the search condition (step S1102).

When the corresponding worker is not present in step S1102, the search unit 353 proceeds to step S1107, which will be described later.

When the corresponding worker is present in step S1102, the search unit 353 extracts the corresponding user ID from the worker information storage unit 310 by the worker extraction unit 355 (step S1103) .

Subsequently, in step S1104, the search unit 353 refers to the desired condition information storage unit 320 and determines whether or not there is a worker who matches the search condition based on the desired condition information including the extracted user ID.

In other words, the search unit 353 determines whether or not there is any desired condition information indicating the desired condition that matches the search condition indicated by the search condition information among the desired condition information including the extracted user ID in the desired condition information storage unit 320.

At this time, if a plurality of conditions is consistent with items included in the search condition information among items included in the desired condition information, for example, the search unit 353 may determine that the desired condition matches the search condition.

Specifically, for example, the search unit 353 may determine that there is a worker who matches the search condition when the work schedule and the area are included in the work schedule and the area indicated by the search condition among the desired conditions.

In step S1104, when the corresponding worker is not present, the search unit 353 proceeds to step S1107, which will be described later.

In step S1105, when the corresponding worker is present in step S1104, the worker extraction unit 355 extracts the user ID representing the corresponding worker from the user ID extracted in step S1103.

Subsequently, in step S1106, the search unit 353 refers to the skill evaluation information storage unit 330 by the score matching unit 356 and determines whether or not there is a worker whose qualification included in the search condition and a corresponding work type score are equal to or more than the score included in the search condition in the skill evaluation information including the user ID extracted in step S1105.

When the corresponding worker is not present in step S1106, the search unit 353 passes the notification indicating that the corresponding worker is not present to the output unit 354 as the search result (step S1107). In this case, a message or the like to prompt a change in the search conditions may be included in the notification.

When the corresponding worker is present in step S1106, the worker extraction unit 355 extracts the worker from among the user IDs extracted in step S1105 (step S1108) .

Subsequently, in step S1109, the worker extraction unit 355 acquires the user ID extracted in step S1108 and the desired condition and the score of the worker corresponding to the user ID as the search result, passes the search result to the output unit 354, and ends the process.

In other words, the worker extraction unit 355 acquires the desired condition information including the user ID extracted in step S1108 from the desired condition information storage unit 320 and acquires the skill evaluation information including the user ID extracted in step S1108 from the skill evaluation information storage unit 330. The worker extraction unit 355 passes the acquired desired condition information and the skill evaluation information to the output unit 354 as the search result.

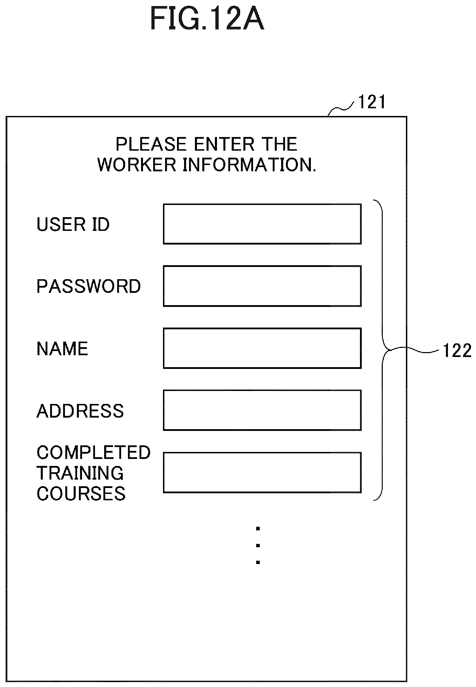

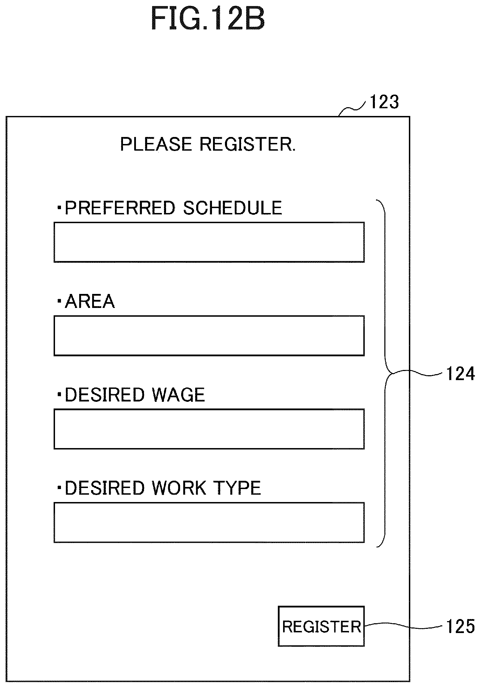

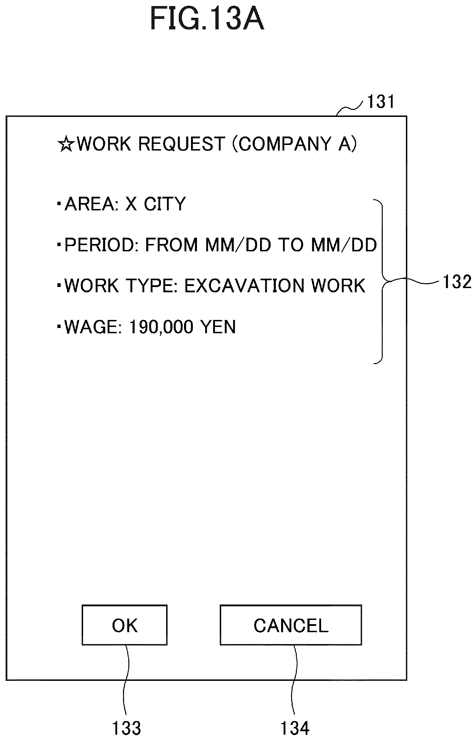

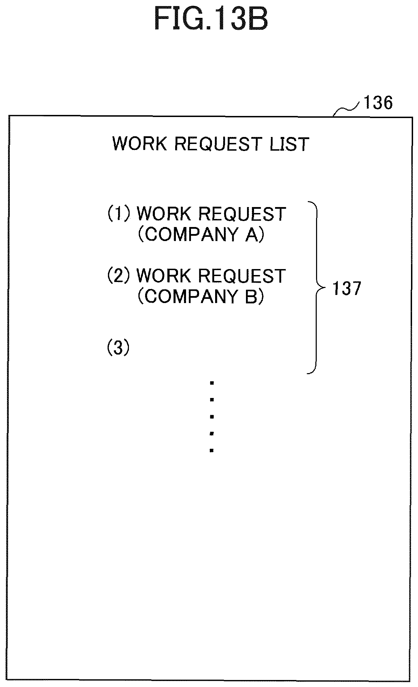

Next, a display example of the worker's terminal device 400 will be described with reference to FIGS. 12 and 13. FIG. 12A is a first diagram illustrating a display example of a worker's terminal device of the present embodiment. FIG. 12B is a second diagram illustrating a display example of a worker's terminal device of the present embodiment. FIG. 12A indicates an example of an input screen of a worker information in the worker's terminal device 400. FIG. 12B indicates an example of an input screen of desired conditions displayed on the worker's terminal device 400.

An input screen 121 illustrated in FIG. 12A has an input field 122. The input field 122 includes the user ID of a worker, password, name, address, completed training course, and the like. The value entered in the input field 122 is stored in the worker information storage unit 310 as the worker information associated with the user ID.

An input screen 123 illustrated in FIG. 12B is an example of a screen displayed on the worker's terminal device 400 in step S1001 of FIG. 10. The input screen 123 includes an input field 124 and an operation button 125. In the input field 124, the preferred schedule, area, wage, type of work, and the like are entered by the worker.

When the operation button 125 is operated in the input screen 123, the desired condition entered in the input field 124 is transmitted to the management device 300 as the desired condition information associated with the user ID.

FIG. 13A is a third view illustrating a display example of a worker's terminal device of the present embodiment. FIG. 13B is a fourth view illustrating a display example of a worker's terminal device of the present embodiment. FIG. 13A illustrates an example of a screen displayed on the worker's terminal device 400 indicating that a work request has been received. FIG. 13B illustrates another example of a screen indicating that a work request has been received displayed on the worker's terminal device 400.

A screen 131 illustrated in FIG. 13A is an example of a screen displayed on the worker's terminal device 400 in step S1012 of FIG. 10.

The screen 131 includes a display field 132 and operation buttons 133 and 134. In the display field 132, the work request for the worker and the application information (search conditions) relating to the requested work are displayed. In the example of screen 131, the completed training course or score is not displayed in display field 132, but these may be displayed in display field 132.

When the operation button 133 is operated by the worker in the screen 131, the worker's terminal device 400 transmits a notification indicating that the work request has been accepted to the management device 300. In addition, when the operation button 134 is operated by the worker in the screen 131, the worker's terminal device 400 transmits a notification indicating that the work request is not accepted to the management device 300.

Further, a photograph of the work site or a conceptional drawing may be displayed on the screen 131 of the work request illustrated in FIG. 13A. The screen 131 may display the required score required for the requested work.

Further, the detailed icon of the work may be displayed in the screen 131. In other words, the screen 131 includes an icon image associated with the content of the work.

In this case, a job seeker who is looking for a job selects a detailed icon (by tapping, clicking, or the like) and displays a picture of the work site and a conceptional drawing. In addition, the overall construction period and the overall process are displayed, and the work details are displayed for each process. Then, the required number of people for the work details and the number of workers that are shortage are displayed. In this way, by making details of the work available, job seekers at the same work site can determine the work to be applied by comparing the other work details that are shortage of the required scores for the work.

A screen 136 illustrated in FIG. 13B indicates the case where multiple requests for work are notified to one worker.

In this case, a list of the work requests 137 received by the worker's terminal device 400 is displayed on the screen 136. When the work request is selected from the list 137 on the screen 136, the worker's terminal device 400 may switch to the screen indicating the details of the work request. The screen indicating the details of the work request is, for example, the screen 131 or the like illustrated in FIG. 13A.

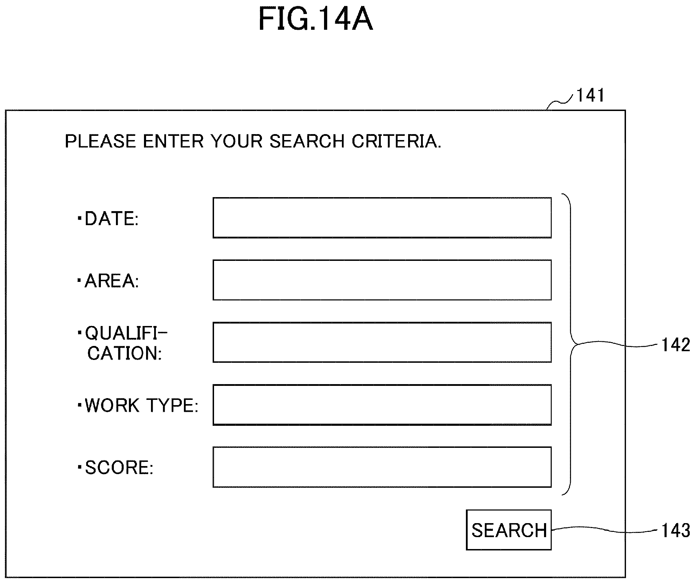

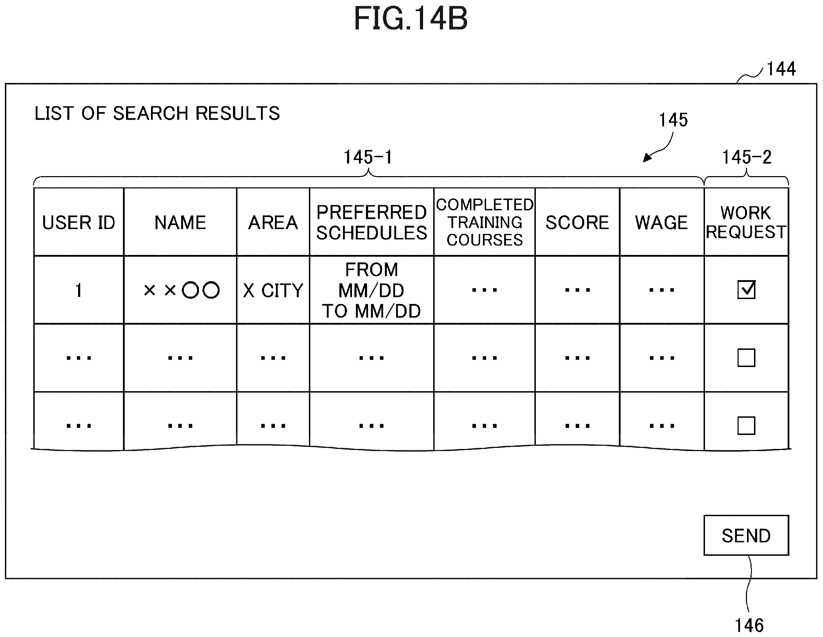

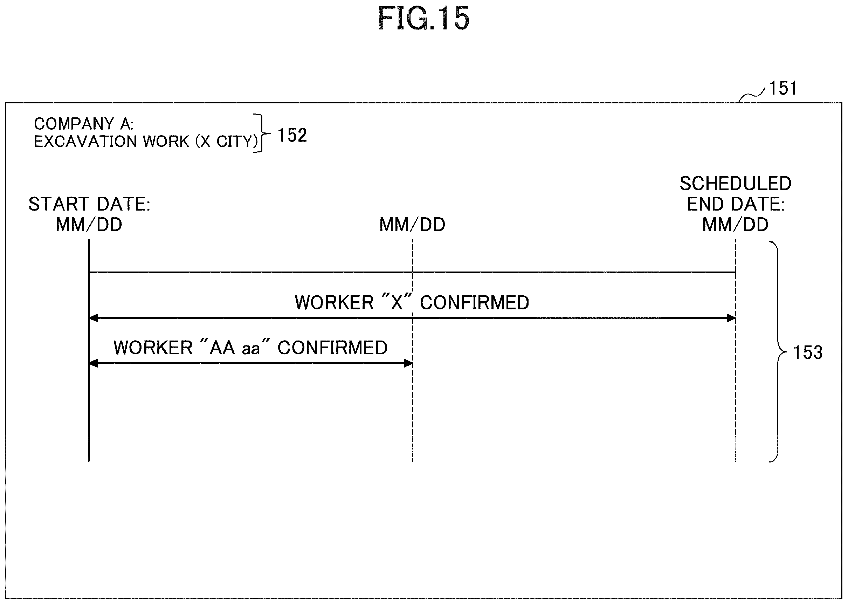

Next, a display example of the contractor's terminal device 500 will be described with reference to FIGS. 14 and 15. FIG. 14A is a first diagram illustrating a display example of a contractor's terminal device of the present embodiment. FIG. 14B is a second diagram illustrating a display example of a contractor's terminal device of the present embodiment.

FIG. 14A illustrates an example of a screen for inputting a search condition displayed on the contractor's terminal device 500. FIG. 14B illustrates an example of a list screen of search results displayed on the contractor's terminal device 500.

The input screen 141 illustrated in FIG. 14A is an example of a screen displayed on the contractor's terminal device 500 in step S1004 of FIG. 10.

The input screen 141 includes an input field 142 and an operation button 143. The input field 142 contains the search conditions. In the example of FIG. 14A, in the input field 142, the search conditions are as follows: work schedule, area, required qualifications (training to be completed), work type, and score.

When the search conditions are input in the input field 142 and the operation button 143 is operated in the input screen 141, the contractor's terminal device 500 transmits the search conditions and the search request to the management device 300.

The list screen 144 illustrated in FIG. 14B is an example of a screen displayed on the contractor's terminal device 500 in step S1008 of FIG. 10.

The list screen 144 includes a display field 145 and an operation button 146. The display field 145 displays a list of workers who have been searched as a result of search. The display field 145 includes a display field 145-1 in which the desired conditions, scores, and the like of the worker are displayed, and a selection field 145-2 for selecting the worker who makes the work request.

The display field 145-1 displays the user ID and name identifying the worker, the desired conditions for each worker, and the work type and the corresponding score. The selection field 145-2 is provided for each worker.

In the example of the screen 144, a check is input in the selection field corresponding to the worker of the user ID "1" in the display field 145. It can be seen that the worker of the user ID "1" was selected as the worker who makes a work request for work in the contractor's terminal device 500.

When the operation button 146 is operated on the screen 144, the contractor's terminal device 500 transmits the user ID "1" to the management device 300 as information indicating the selected worker.

In addition, when any one row is selected (by tapping, clicking, or the like) from the list of workers (applicants) in the screen 141, the selected applicants' information is displayed. The applicant's information includes information on applicants' scores, qualifications, photographs (images), and information on the last several work details.

It should be noted that not only the score, but also specific numerical values or graphs such as work efficiency, fuel efficiency, and actual work efficiency may be displayed on the screen 141. In addition, a moving image of the applicant's work details on the last several work details may be displayed on the screen 141. In other words, at least one of the selected applicant's (worker's) work efficiency, the fuel efficiency, the actual work efficiency, and the like may be displayed in numerical or graphical form on the screen 141.

In this case, the applicant information may be stored in the worker information storage unit 310 as part of the worker information.

When this information is received, the management device 300 displays a screen indicating that a work request has been received on the worker's terminal device 400 associated with the user ID "1" (see FIG. 13A).

FIG. 15 is a third diagram illustrating a display example of a contractor's terminal device of the present embodiment. A screen 151 illustrated in FIG. 15 is, for example, a result screen indicating the state of acceptance of a work request by a worker displayed on the contractor's terminal device 500 in step S1015 of FIG. 10.

The result screen 151 includes display fields 152 and 153. The display field 152 displays information including the work type and the area where the work was requested to the worker.

The display field 153 also displays information about the worker who accepted the work request through the work period from the start date to the scheduled end date of the work.

In the example of the result screen 151, it can be seen that the worker "x" accepted the work request for the work period from the start date of the work period (MM/DD) to the scheduled end date (MM/DD) of the work period.

In addition, in the example of the result screen 151, it can be seen that the worker "AA aa" accepted the work request for the work period from the start date of the work period (MM/DD) to the date of (MM/DD) midway through the work period.

From these results, it can be inferred that the progress of the work will be slowed down in the second half of the work period due to the decrease in the number of workers.

Accordingly, according to the present embodiment, the contractor can easily understand that it is sufficient to search for a worker who accepts a work request for excavation for the work period from MM/DD through the work period to the scheduled end date MM/DD of the work period.

In the preferred embodiment, a message may be displayed on the contractor's terminal device 500 indicating that it is recommended to search for workers who have completed the training required for the excavation work, who have the schedule included in the desired conditions from MM/DD through the work period to the scheduled end date MM/DD of the work period, and who are in the area of x city.

Further, the management device 300 may search for workers who have completed the training required for the excavation work, who have the schedule included in the desired conditions from MM/DD through the work period to the scheduled end date MM/DD of the work period, and who are in the area of x city. The management device 300 may display a list of search results on the contractor's terminal device 500.

As described above, according to the present embodiment, the worker can receive a work request that meets worker's desired condition by merely registering the worker information and the desired condition information. In addition, the contractor may obtain a list of workers who possess the qualifications and skills necessary for the work type and who satisfy the recruitment guidelines only by entering the search conditions (recruitment guidelines).

Accordingly, according to this embodiment, in order for the contractor to find a worker having qualifications and skills corresponding to the work type, a process of advertising job openings or searching for a worker by a person is not required.

In addition, according to the present embodiment, in order to identify the workers by matching the desired conditions of the workers with the application guidelines of the contractor, the time to negotiate the working conditions between the contractor and the worker can be reduced.

Accordingly, according to the present embodiment, it is easy to assign a person having the skill appropriate for the work details.

In the present embodiment, the search condition and the desired condition include information indicating the area. Therefore, for example, when transporting workers to and from a work site, the distance and time required for transporting workers to and from a work site can be reduced by requesting workers living in a certain area to carry out the work.

In addition, according to the present embodiment, the worker is made more accessible to requests for work by improving the worker's skills, since the worker's skill evaluation information is updated each time the worker gains work experience. Therefore, according to the present embodiment, it is possible to increase the motivation of the worker to improve the worker's skill.

### (Second Embodiment)

Second embodiment will now be described with reference to the drawings. Second embodiment differs from the embodiment in that it refers to external information provided by a server or the like external to the management system SYS and refers to the attendance of the worker or the like when selecting a worker. Accordingly, the following description of second embodiment describes the differences from the embodiment, and those having the same functional structure as the embodiment are given the same reference numerical number as those used in the description of the embodiment, and the description thereof is omitted.

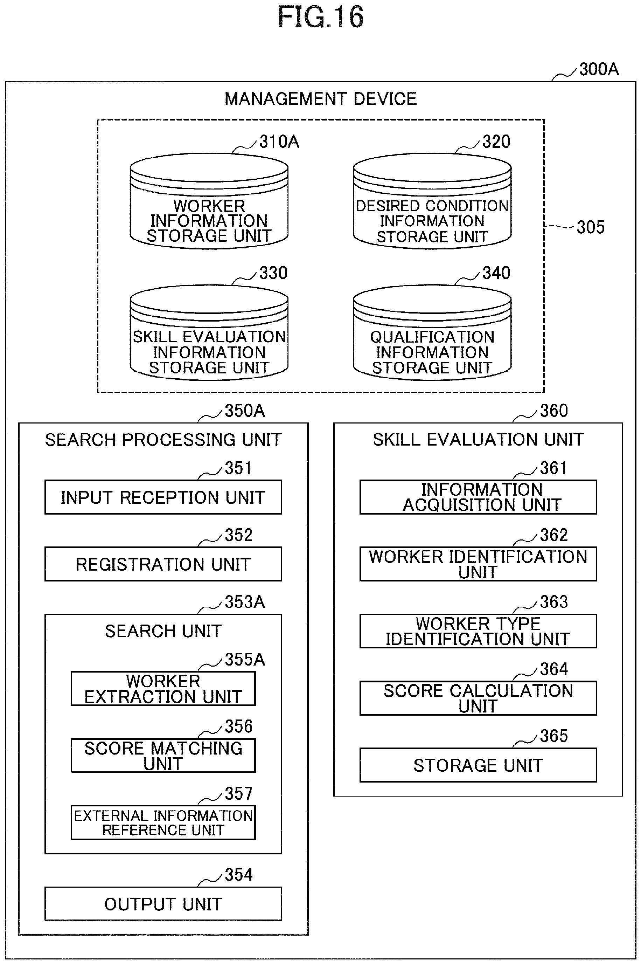

FIG. 16 is a diagram illustrating the function of the management device of second embodiment. A management device 300A of the present embodiment includes a worker information storage unit 310A, the desired condition information storage unit 320, the skill evaluation information storage unit 330, the qualification information storage unit 340, a search processing unit 350A, and the skill evaluation unit 360.

The worker information storage unit 310A of the present embodiment includes items such as the family composition of the worker and the attendance of the worker in the stored worker information. The details of the worker information storage unit 310A will be described later.

The search processing unit 350A of the present embodiment includes the input reception unit 351, the registration unit 352, a search unit 353A, and the output unit 354. The search unit 353A of the present embodiment includes a worker extraction unit 355A, the score matching unit 356, and an external information reference unit 357.

The worker extraction unit 355A of the present embodiment refers to the information about the attendance of the worker stored in the worker information storage unit 310A when extracting the worker.

The external information reference unit 357 of the present embodiment refers to the external information provided by the external server or the like of the management system SYS, determines whether or not a notification is made to the worker's terminal device 400 and the contractor's terminal device 500 in accordance with the external information, and when a notification is made, determines the content of the notification.

Hereinafter, the external information of the present embodiment will be described. The external information of the present embodiment includes information relating to an epidemic of infectious diseases provided by a server of a public organization such as the Ministry of Health, Labour and Welfare or the Japan Meteorological Agency, weather information, and the like. Weather information includes, for example, information indicating an area where a typhoon is approaching. That is, the external information of the present embodiment is residential area information related to the area where the workers reside.

The external information reference unit 357 of the present embodiment may be preset by an administrator of the management device 300A or the like to be an external server to be referenced.

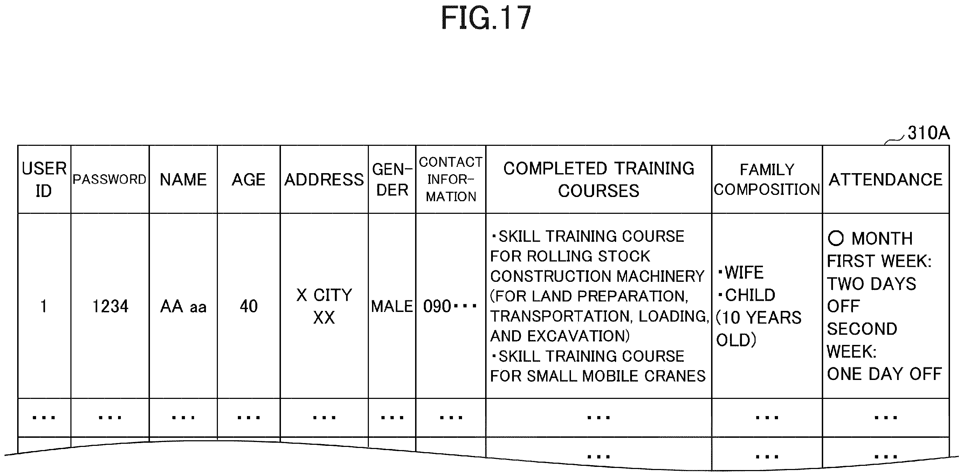

FIG. 17 is a diagram illustrating an example of worker information storage in second embodiment. The worker information stored in the worker information storage unit 310A of the present embodiment includes a user ID, password, name, age, address, gender, contact information, completed training course, family composition, attendance, and the like as items of information.

The item "Family Composition" indicates the family composition of workers. The entry of family composition values may be made at the discretion of the workers.

The item "Attendance" indicates the attendance of a worker. In the example of FIG. 17, the item "Attendance" value indicates the number of days of the worker's weekly leave. In the example of FIG. 17, the worker with user ID "1" has two days off in the first week of MM month and one day off in the second week.

The value of the item "Attendance" may be input by the worker and stored in the worker information storage unit 310A, or the management device 300A may be acquired from the history of a work request accepted by a past worker and stored in the worker information storage unit 310A.

In addition, the information contained in the worker information indicating the worker's attendance is not limited to the example of FIG. 17. The information indicating the attendance or absence of the worker may be, for example, a day of attendance, a time of attendance, a time of leaving, and the like.

In addition, information indicating the attendance or absence of workers may be managed separately from the information of workers. In such a case, the user ID corresponds to the worker information and the attendance information of the worker.

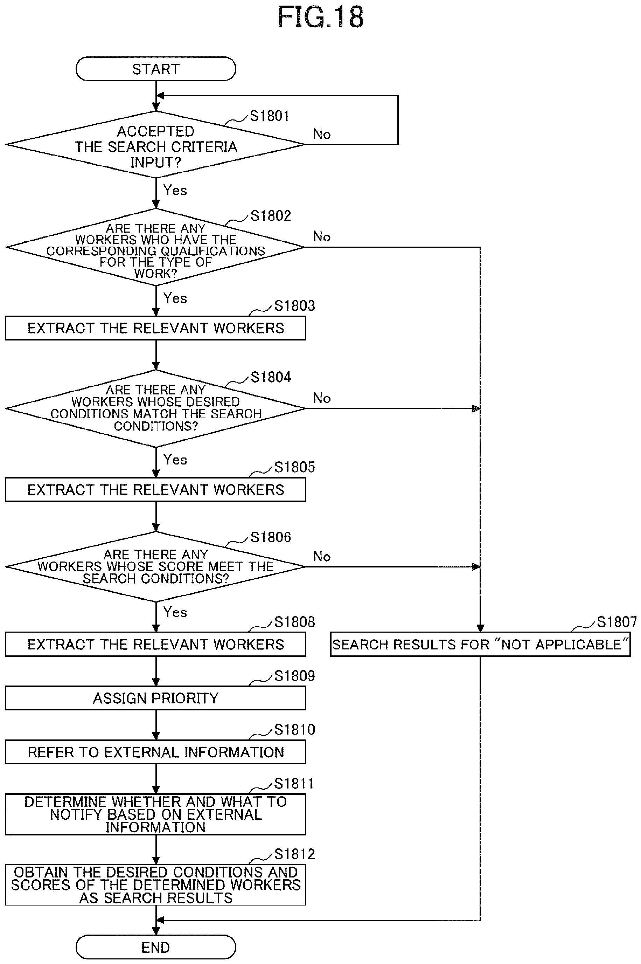

FIG. 18 is a flowchart illustrating processing of a search unit of second embodiment. Since the process from step S1801 to step S1808 of FIG. 18 is the same as the process from step S1101 to step S1108 of FIG. 11, the description thereof will be omitted.

After step S1808, in step S1809, the search unit 353A of the present embodiment refers to the worker information storage unit 310A by the worker extraction unit 355A and assigns a priority to the worker who makes a work request according to the number of days off of the worker extracted in step S1808.

Specifically, for example, reference is made to the user ID extracted in step S1808 and information indicating the attendance of the corresponding worker, and it is judged whether or not the worker has taken a leave of about two days off per week. The worker extraction unit 355A may give a higher priority to workers who are judged to be taking about two days off per week than workers who are judged not to be taking about two days off per week.

In the present embodiment, when a list of search results is displayed on the contractor's terminal device 500, the high-priority workers may be displayed in order.

Subsequently, in step S1810, the search unit 353A references information provided by the external information reference unit 357.

Subsequently, in step S1811, the search unit 353A judges whether or not there is a notification to the worker's terminal device 400 and the contractor's terminal device 500 based on the referenced external information, and if there is a notification, determines the contents thereof.

Here, the processing of step S1810 and step S1811 will be described. The external information reference unit 357 of the present embodiment will be described as reference information for epidemic of infectious diseases in each area. Infectious diseases include, for example, influenza, measles, and the like.

The external information reference unit 357 of the present embodiment determines, for example, whether or not information representing an epidemic of infectious diseases in an area indicated by the value of the item "Address" of the worker information including the user ID extracted in step S1808 in the referenced external information is included.

If, for example, the referenced external information includes information indicative of an epidemic of infectious diseases in the area, the external information reference unit 357 may judge the worker to be notified and determine the contents of the notification to be a message that urges the worker to pay attention to the worker's physical condition. The external information reference unit 357 may determine that no notification is made to the referenced external information if the referenced external information does not include information indicating an epidemic of infectious disease in the area indicated by the address of the worker.

The external information reference unit 357 of the present embodiment may judge that there is a notification to a worker who requests a work in the area when the external information includes information indicating an epidemic of infectious diseases in the area included in the search conditions inputted from the contractor's terminal device 500.

The external information reference unit 357 may determine a message indicating that an infectious disease is prevalent in the area where the work site is located to a worker who requests a work in the area.

In addition, when the family composition of the worker has children or the like going to school, the external information reference unit 357 may determine from the external information whether a class in a school where the child attends school is closed due to an infectious disease. The external information reference unit 357 may determine the contents of a notification to urge the worker to pay attention to the worker's physical condition when the class is closed or the like.

The school to which the child attends may be identified, for example, based on the age of the child or the area of residence of the worker.

Subsequently, the worker extraction unit 355A acquires the user ID extracted in step S1808 and the desired condition and the score of the corresponding worker as the search result, sends the information to the output unit 354 (step S1812), and ends the process. At this time, the worker extraction unit 355A of the present embodiment sends the notification of the content determined by the external information reference unit 357 to the output unit 354 together with the search result and the desired condition and the score of the worker.

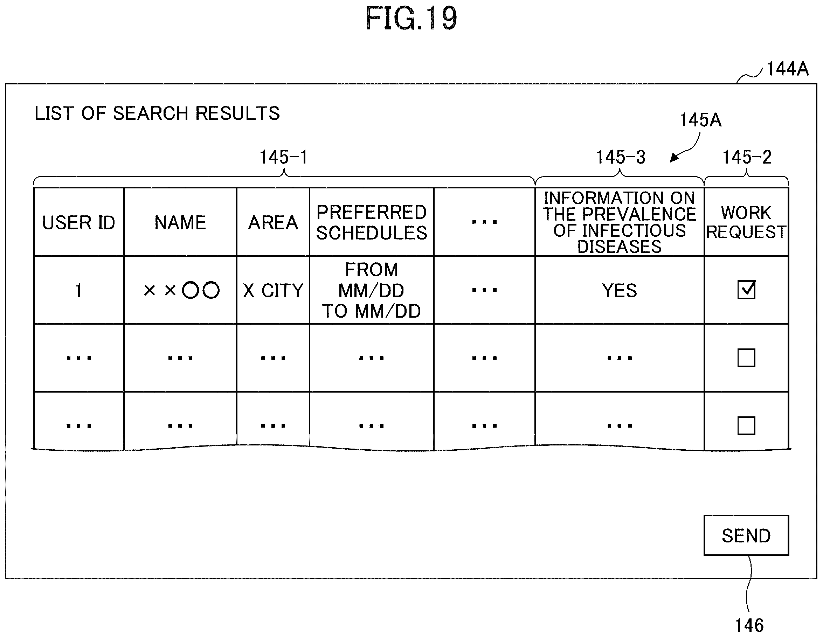

FIG. 19 is a first diagram illustrating a display example of a contractor's terminal device of second embodiment. FIG. 19 indicates an example of a list screen of search results displayed on the contractor's terminal device 500 in step S1004 of FIG. 10.

The list screen 144A includes a display field 145A and an operation button 146. The display field 145A displays a list of workers who have been searched as a search result. In addition, the worker's information is displayed on the display field 145A in the order of priority based on the employee's attendance information. In the display field 145A illustrated in FIG. 19, a worker with user ID "1" is displayed at the top. Accordingly, it can be assumed that the display field 145A is such that the worker of User ID "1" regularly takes about two days off per week and can work under relatively low load conditions.

The display field 145A includes a display field 145-1 in which the desired conditions and scores of the workers are displayed, a selection field 145-2 for selecting the workers to whom the work is requested, and a display field 145-3 in which the workers are notified of the presence or absence of an infection.

In the display field 145-3 of the present embodiment, when a worker is judged to be notified by the external information reference unit 357, a "Yes" is displayed, and when a worker is judged to be not notified, a "No" is displayed. In the example of FIG. 19, it can be seen that the worker having the user ID "1" was judged to have been notified of the infection.

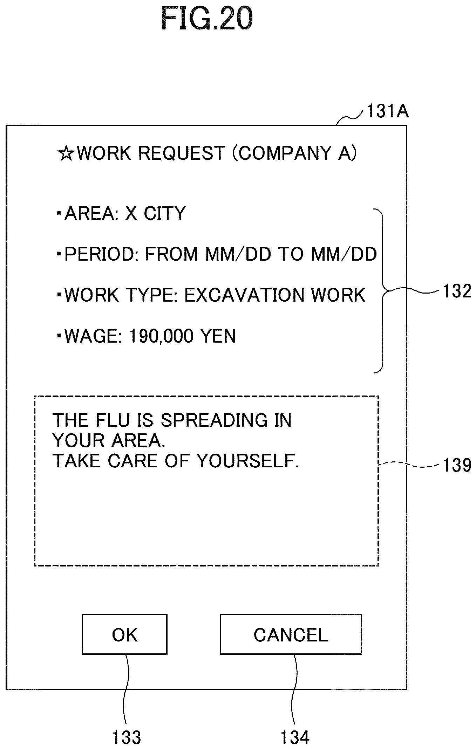

FIG. 20 is a diagram illustrating a display example of a worker's terminal device in second embodiment. The screen 131A illustrated in FIG. 20 is an example of a screen displayed on the worker's terminal device 400 that is determined to be notified by the external information reference unit 357. The screen 131A is displayed, for example, on the worker's terminal device 400 in step S1012 of FIG. 10.

The screen 131A includes display fields 132 and 139 and operation buttons 133 and 134. The display field 139 displays a message that includes the influenza epidemic in the area where the worker's address is located and encourages the worker to be careful about managing the worker's physical condition.

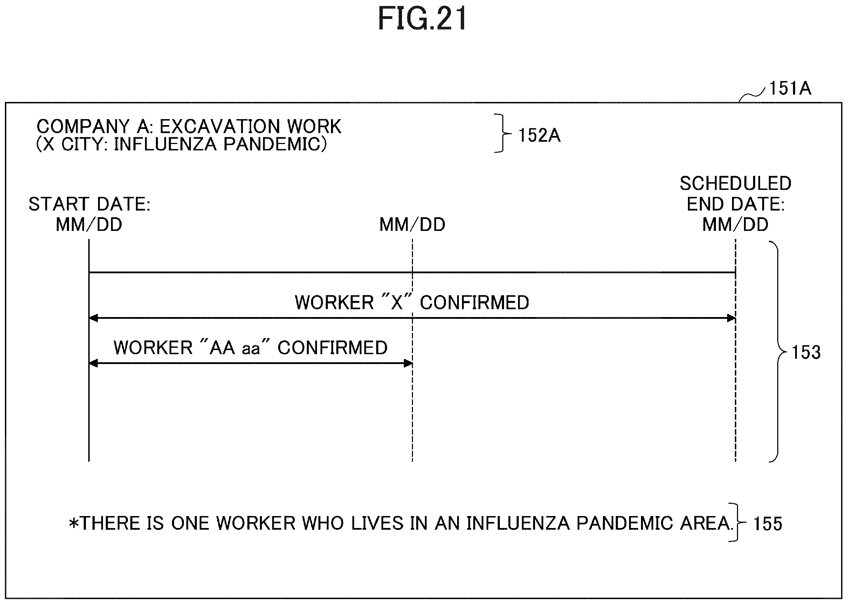

FIG. 21 is a second diagram illustrating a display example of a contractor's terminal device of second embodiment. The result screen 151A illustrated in FIG. 21 is, for example, a result screen indicating the state of acceptance of a work request by a worker displayed on the contractor's terminal device 500 in step S1015 of FIG. 10.

In FIG. 21, a result screen is shown when the external information referenced by the external information reference unit 357 includes information indicative of an influenza epidemic in the area where the work is performed.

The result screen 151A has display fields 152A, 153, and 155. The display field 152A indicates the type and area of the work requested to the worker and the information indicating the influenza epidemic in the area where the work is to be performed.

The display field 155 also indicates that for one of the workers indicated in the display field 153, the external information includes information indicating an influenza epidemic in the area where the worker resides. In other words, the display field 155 indicates that one of the workers whose name is indicated in the display field 153 is "notified" by the external information reference unit 357. That is, the management device 300A notifies the contractor's terminal device 500 of the information regarding the risk of infection to the worker who requested the work.

As described above, according to the present embodiment, the display order when displaying the list of search results is determined in accordance with the information indicating the attendance or absence of the worker. Accordingly, in the present embodiment, it is easier to request work from a worker who has taken a regular leave of absence. Therefore, according to the present embodiment, the occurrence of a situation in which a work request is concentrated among one worker can be suppressed, and an excessive load on the worker can be prevented.

Further, in the present embodiment, based on the external information provided by the external server, it is possible to urge a worker to pay attention to the management of physical condition. In the present embodiment, based on the external information provided by the external server, it is possible to present information regarding the risk of infection to the worker who requested the work.

Accordingly, according to the present embodiment, both the worker and the contractor can be urged to pay attention to an epidemic of infectious diseases, and the occurrence of a delay in the work process caused by a shortage of manpower due to a sick leave of the worker can be suppressed.

In the example described above, information indicating the epidemic of infectious diseases was defined as residential area information (external information). However, information indicating the approach of a typhoon can also be defined as residential area information.

In this case, the external information reference unit 357 determines that notification is present when the referenced external information includes information for notifying an approach of a typhoon in an area indicated by a value of an item "address" of worker information including a user ID extracted in step S1808.

The external information reference unit 357 may determine the message to urge the worker to pay attention to the influence on the transportation system caused by the approach of the typhoon and transmit the message to the worker's terminal device 400.

In the present embodiment, a message indicating that a typhoon is approaching an area where an operator resides may be sent to the contractor's terminal device 500.

Therefore, in the present embodiment, both the worker and the contractor can be urged to pay attention to the adverse weather conditions, and the occurrence of the delay in the work process due to the shortage of workers due to the influence on the transportation system can be suppressed.

### (Third Embodiment)

Third embodiment will be described below with reference to the drawings. Third embodiment differs from the embodiment in that it refers to the mutual evaluation of the worker and the contractor in selecting the worker. Accordingly, the following description of the further embodiment describes the differences from the embodiment, and those having the same functional structure as the embodiment are given the same reference numerical number as those used in the description of the embodiment, and the description thereof is omitted.

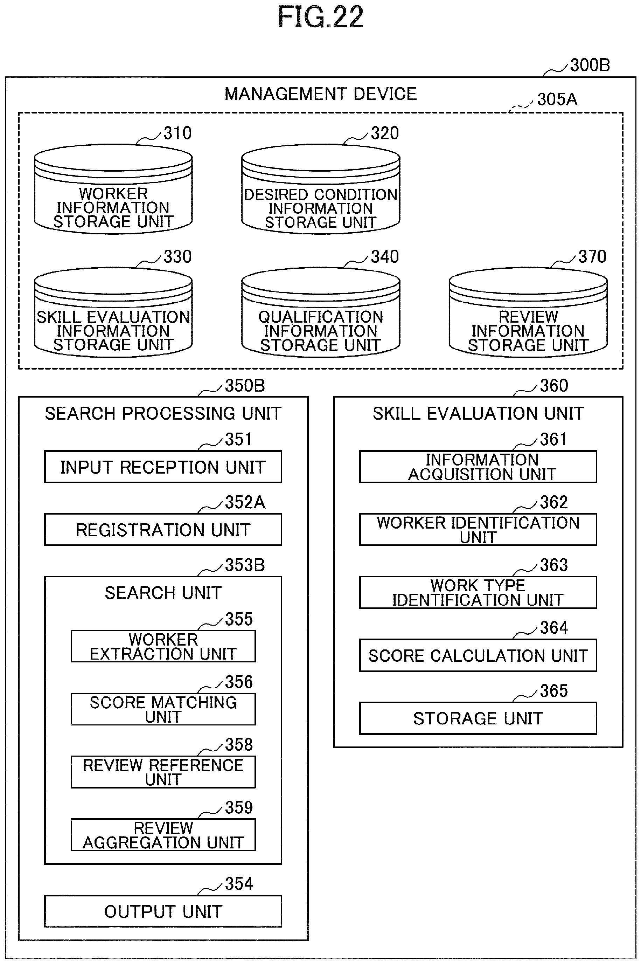

FIG. 22 is a diagram illustrating the functions of the management device according to third embodiment.

The management device 300B according to the present embodiment includes the worker information storage unit 310, the desired condition information storage unit 320, the skill evaluation information storage unit 330, the qualification information storage unit 340, a search processing unit 350B, the skill evaluation unit 360, and a review information storage unit 370. Each storage unit according to the present embodiment may be provided in the management device 300B as the storage unit 305A.

The review information storage unit 370 stores information representing the evaluation result of the contractor by the worker and information representing the evaluation result of the worker by the contractor.

In the following description, information indicating the evaluation results of the contractor by the worker is called the contractor review information for the contractor by the worker. In the following description, information indicating the evaluation results of the workers by the contractor is called the workers' review information for the workers by the contractor. The details of the review information storage unit 370 will be described later.

The search processing unit 350B of the present embodiment includes the input reception unit 351, a registration unit 352A, a search unit 353B, and the output unit 354.

The registration unit 352A of the present embodiment stores the review information input from the worker's terminal device 400 or the contractor's terminal device 500 in the review information storage unit 370 and updates the review information storage unit 370.

The search unit 353B includes the worker extraction unit 355, the score matching unit 356, a review reference unit 358, and a review aggregating unit 359. The review reference unit 358 refers to the review information storage unit 370 when extracting a worker by the worker extraction unit 355.

The review aggregating unit 359 aggregates the information of the contractor review and the information of the worker review, and calculates an index indicating the compatibility between the worker and the contractor. In the following description, the index of compatibility between the worker and the contractor is called the degree of matching. In this embodiment, the higher the degree of matching, the better the compatibility is assumed.

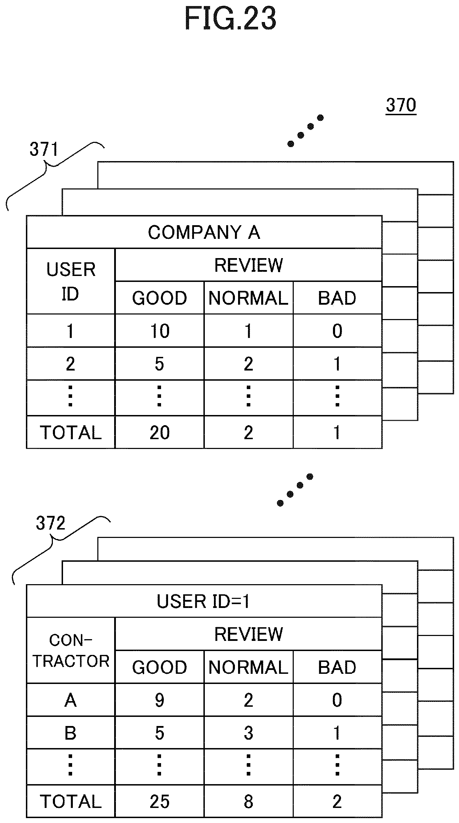

FIG. 23 is a diagram illustrating an example of a review information storage unit according to third embodiment. The review information storage unit 370 of the present embodiment includes the contractor review information 371 representing the evaluation results of the contractor by the worker and the worker review information 372 representing the evaluation results of the contractor by the contractor.

The contractor review information 371 includes user IDs and reviews as items of information, and is associated with items "User IDs" and "Reviews". In addition, the item "User ID" and the item "Review" are associated with the information identifying the contractor in the contractor review information 371. Furthermore, in Contractor Review Information 371, the value of the item "Review" is associated with, for example, "Good", "Normal", and "Bad".

In FIG. 23, for example, for the contractor "Company A", it can be seen that the worker of the user ID "1" registered 10 reviews of "Good" and one review of "Normal".

In other words, the worker with user ID "1" accepted eleven work requests from the contractor "Company A" and performed the actual work. Ten of the work were evaluated "Good" and "Normal" for each work.

In addition, in the contractor Review Information 371, the total of the results of reviews by workers who had worked for the contractor "Company A" in the past.

In FIG. 23, the contractor review information 371 indicates that the contractor "Company A" had received 23 requests for work from multiple workers in the past. Of these, 20 operations were evaluated "Good", two operations were evaluated "Normal", and one operation was evaluated "Bad".

The worker review information 372 includes a contractor and a review as items of information, and the Item "Contractor" and the item "Review" are associated with each other. The item "Contractor" indicates information identifying the Contractor. Specifically, the value of the item "Contractor" may be the name of the contractor.

In addition, the item "Contractor" and the item "Review" are associated with the user ID in the worker review information 372. Furthermore, in the worker review information 372, the value of the item "Review" is associated with three levels, for example, "Good", "Normal", and "Bad".

FIG. 23 indicates, for example, for the worker with a user ID "1", the contractor "A" registered a review of "Good" nine times and a review of "Normal" twice.

In other words, eleven work requests made by the contractor "A" were accepted by the worker with the User ID "1", and the contractor "A" evaluated nine operations as "Good" and evaluated two operations as "Normal".

In FIG. 23, for the worker with a user ID "1", the contractor "B" registered a review of "Good" five times and a review of "Normal" three times.

In other words, eight work requests made by the contractor "B" were accepted by the worker with the User ID "1", and contractor "B" evaluated five operations as "Good" and evaluated three operations as "Normal".

In addition, in the worker review information 372, the total of the results of the reviews by the contractors that had previously had the user ID "1" executed the work is included.

In the worker review information 372 of FIG. 23, the worker with the user ID "1" had been asked to perform 35 operations by multiple contractors in the past. Of these, 25 operations were evaluated as "Good", 8 operations were evaluated as "Normal", and 2 operations were evaluated as "Bad".

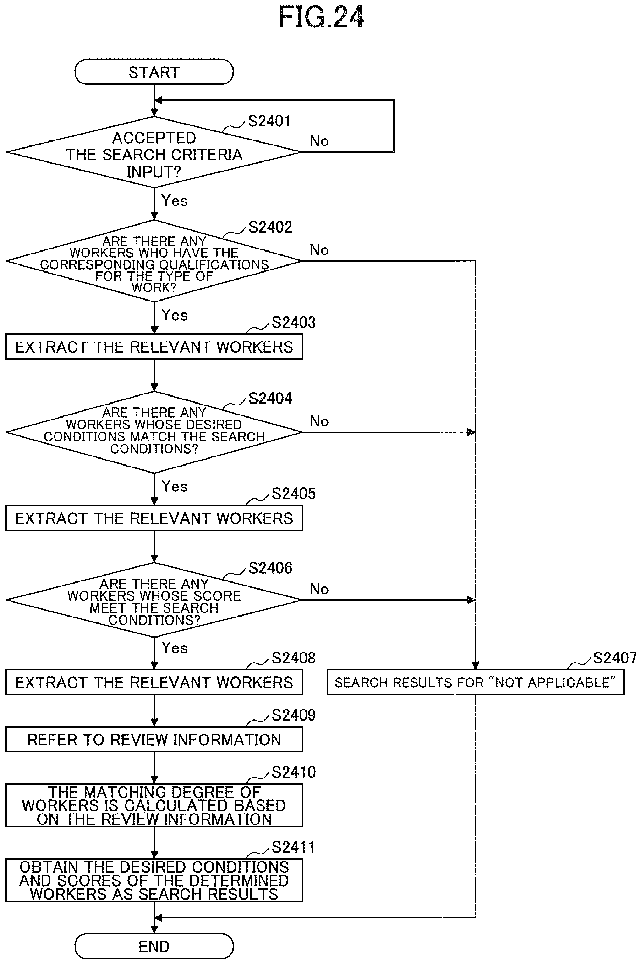

FIG. 24 is a flowchart explaining the process of the search unit of third embodiment. The process from step S2401 to step S2408 of FIG. 24 is the same as the process from step S1101 to step S1108 of FIG. 11. Therefore, the description thereof will be omitted.

In step S2409, the search unit 353B of the present embodiment refers to the review information storage unit 370 by the review reference unit 358, followed by step S2408.

Specifically, the review reference unit 358 refers to the worker review information 372 for the worker indicated by the user ID extracted in step S2408 and the contractor review information 371 for the contractor who made the search request.

Subsequently, in step S2410, the search unit 353B calculates the degree of matching between the worker whose user ID is extracted in step S2408 and the contractor who made the search request by the review aggregating unit 359.

Hereinafter, for example, the calculation of the degree of matching when the user ID extracted in step S2408 is set to the user ID "1" and the contractor who made the search request is set to the "A" of the contractor will be described.

From the worker review information 372 of the user ID "1" and the contractor review information 371 of the contractor "A", the user ID "1" performed work 11 times in response to the work request of the contractor "A" (see FIG. 23).

Of these, in the contractor review information 371, the worker with user ID "1" indicated that 10 out of 11 reviews of the contractor "A" was "Good". In other words, the workers with user ID "1" evaluated the work of the contractor "A" as good at about 90%.

In addition, in the worker review information 372, the contractor "A" stated that nine of the eleven reviews were "Good" to the worker with user ID "1". In other words, the contractor "A" evaluated "A" as good at about 80%.

Accordingly, both the evaluation of the contractor "A" by the worker of the user ID "1" and the evaluation of the worker of the user ID "1" by the contractor "A" are "Good" at 80% or more, suggesting a good relationship between them.

In this case, the review aggregating unit 359 determines that the degree of matching between the worker having the user ID "1" and the contractor "A" is "high".

The review aggregating unit 359 may obtain the number of times a worker evaluates the contractor as "Good", "Normal", or "Bad"; or may obtain the number of times a contractor evaluates the worker as "Good", "Normal", or "Bad"; and may calculate the degree of matching as a numerical value using each number.

The review aggregating unit 359 may assign a priority to the worker extracted in step S2408 according to the calculated degree of matching and display a list in order according to the priority when the list of search results is displayed to the contractor's terminal device 500.

After step S2410, the worker extraction unit 355 acquires the user ID extracted in step S2408 and the desired conditions and the score of the corresponding worker as the search result, sends the information to the output unit 354 (step S2411), and ends the process. At this time, the worker extraction unit 355 of the present embodiment sends the degree of matching calculated by the review aggregating unit 359 to the output unit 354 together with the desired conditions of the worker and the result of the search of the score.

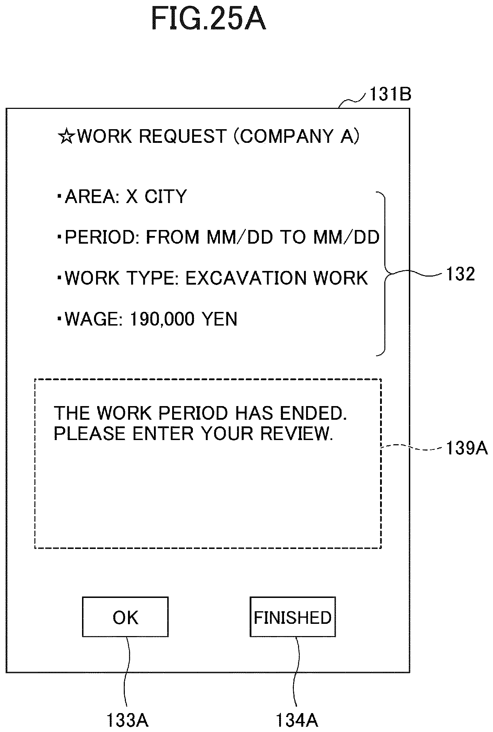

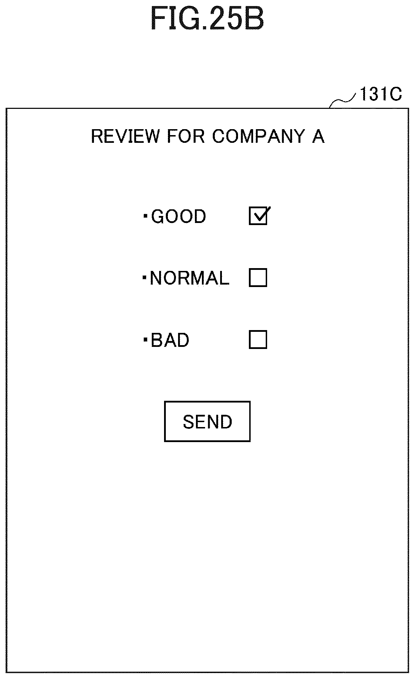

FIG. 25A is a first diagram illustrating a display example of a worker's terminal device in third embodiment. FIG. 25B is a second diagram illustrating a display example of a worker's terminal device in third embodiment. FIG. 25A illustrates an example of a screen displayed on the worker's terminal device 400 after the work period accepted by the worker has expired, and FIG. 25B illustrates an example of a registration screen for a review.

The screen 131B illustrated in FIG. 25A includes display fields 132 and 139A and operation buttons 133A and 134A. The display field 139A displays a message that urges registration of the review.

When the operation button 133A is operated, the worker's terminal device 400 transits the screen 131B to the screen 131C illustrated in FIG. 25B.

When the operation button 134A is operated, the worker's terminal device 400 may terminate the display of the screen 131B.

In the screen 131C illustrated in FIG. 25B, as a review for the contractor, a selection field for selecting "Good", "Normal", or "Bad" and an operation button for transmitting the selection result to the management device 300B are displayed.

The worker's terminal device 400 transmits the result of the review to the management device 300B when a review to the contractor is entered and an operation button is operated.

When the management device 300B receives the result of the review from the worker's terminal device 400, the registration unit 352A reflects the result of the review in the contractor review information 371.

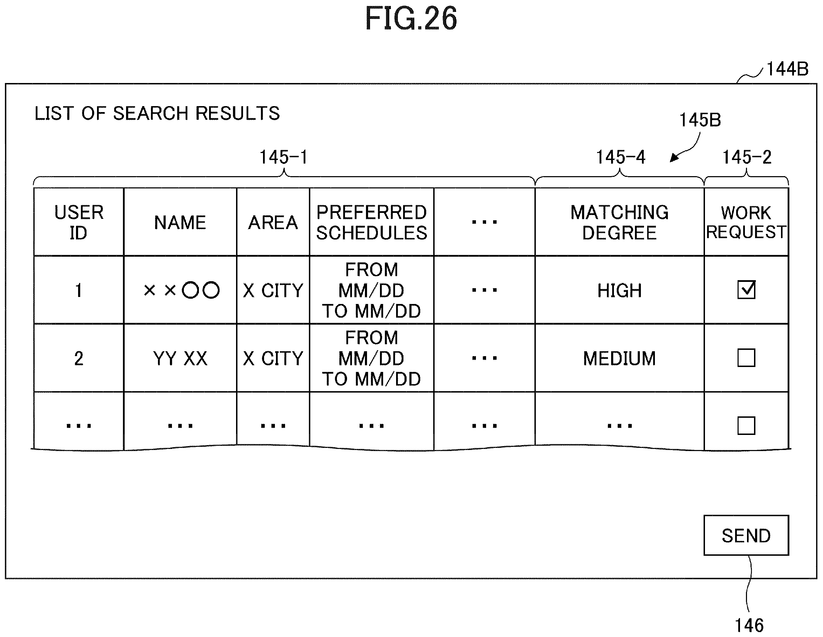

FIG. 26 is a first diagram illustrating a display example of a contractor's terminal device of third embodiment. FIG. 26 illustrates an example of a list screen of search results displayed on the contractor's terminal device 500 in step S1004 of FIG. 10.

The list screen 144B includes a display field 145B and an operation button 146. The display field 145B displays a list of workers who have been searched as search results.

The display field 145B includes a display field 145-1 in which the desired conditions, scores, and the like of the worker are displayed, a selection field 145-2 in which the worker to be requested is selected, and a display field 145-4 in which the degree of matching between the worker and the contractor having the contractor's terminal device 500 is displayed.

In the display field 145B of the present embodiment, the worker with a high degree of matching is displayed in order in the display field 145-4.

In the example of FIG. 26, the worker of the user ID "1" displayed at the beginning of the display field 145B has a high degree of matching with the contractor "A" who made the search request than the worker of the user ID "2" displayed next.

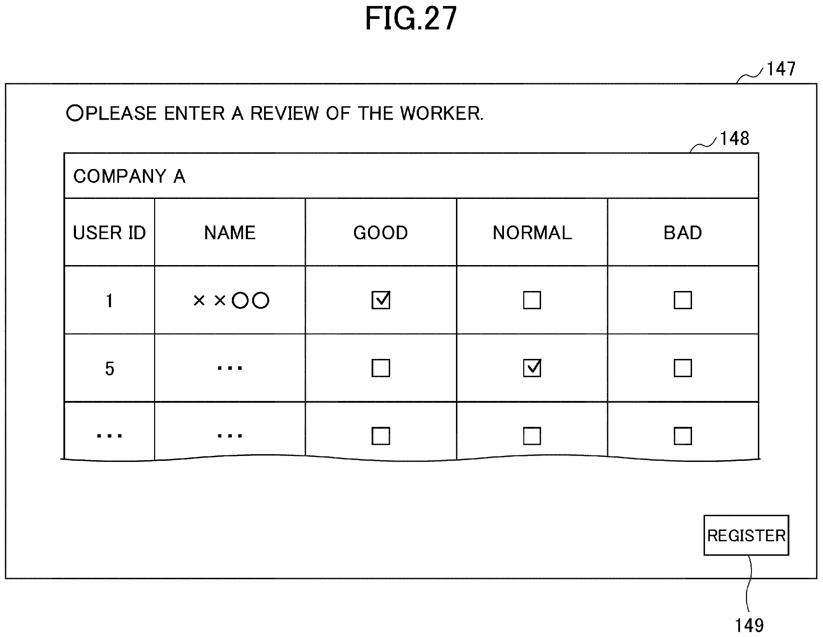

FIG. 27 is a second diagram illustrating a display example of a contractor's terminal device of third embodiment. The screen 147 illustrated in FIG. 27 displays the review registration screen displayed on the contractor's terminal device 500 after the contractor requested the worker to perform the work.

The screen 147 includes an input field 148 and an operation button 149. The input field 148 corresponds to a list of the user IDs and names of the workers who accepted the work request and actually performed the work and a selection button for each worker's review.

The contractor's terminal device 500 transmits the result of the review to the management device 300B when the worker's review is selected and the operation button 149 is operated in the input field 148.

When the management device 300B receives the result of the review from the contractor's terminal device 500, the registration unit 352A reflects the result of the review in the worker review information 372.

As described above, according to the present embodiment, the contractor can easily grasp a worker who is found to be compatible with the company, and can easily request a worker who is found to be compatible with the company. In the present embodiment, the worker is more likely to be requested by the contractor who is said to be compatible with the worker.

In the present embodiment, the degree of matching between the worker and the contractor is calculated, but this is not limited thereto. In the present embodiment, for example, the worker extraction unit 355 may extract workers with a predetermined value or higher percentage of the number of times that the review is "Good" to the total number of times that was reviewed.

### (Fourth Embodiment)

Fourth embodiment will be described below with reference to the drawings. The fourth embodiment differs from the embodiment in that the management device 300 communicates with the information processing device managed by a training school which performs the training required to complete the work indicated by the various types of work. Accordingly, the following description of the further embodiment describes the differences from the embodiment, and those having the same functional structure as the embodiment are given the same reference numerical number as those used in the description of the embodiment, and the description thereof is omitted.

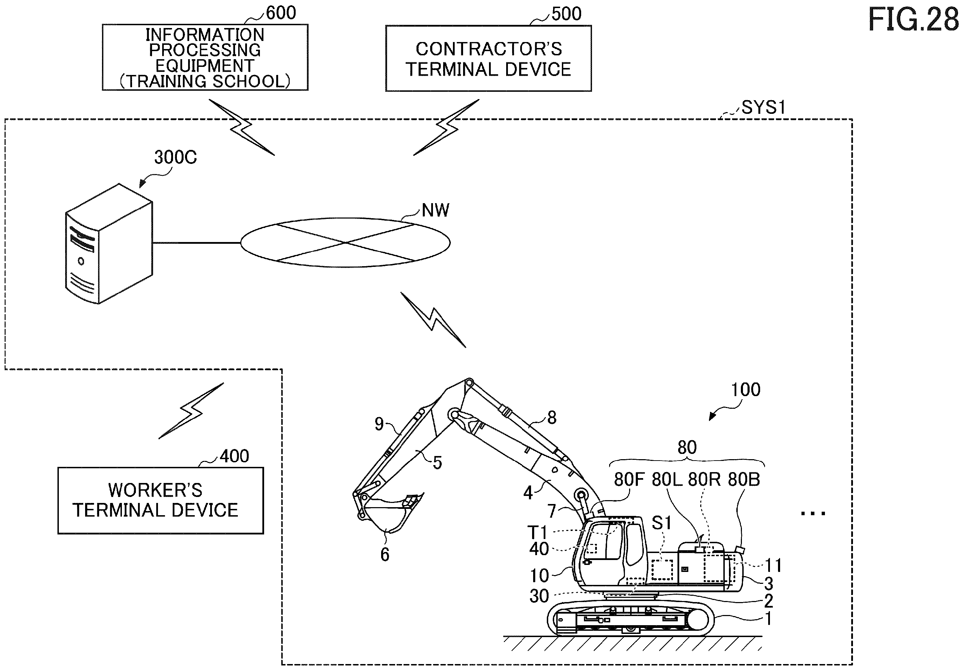

FIG. 28 is a schematic diagram illustrating an example of a management system for a shovel in fourth embodiment. A management system SYS1 of the present embodiment includes a management device 300C and a shovel 100.

The management device 300C of the present embodiment communicates with an information processing device 600 managed in a training school where a training required to be completed according to the type of work of the shovel 100 is performed.

The information processing device 600, for example, maintains a correlation between the user ID of the worker and information indicating the training that the worker is scheduled to attend or is undergoing. When the worker completes the training, the information processing device 600 transmits the completion information corresponding to the information specifying the completed training and the user ID to the management device 300C.

When receiving the completion information from the information processing device 600, the management device 300C updates the worker information storage unit 310 based on the completion information.

In the present embodiment, when the completion information is received from the training school, the worker information stored in the worker information storage unit 310 is automatically updated. Accordingly, according to the present embodiment, the worker does not need to update the worker's information each time the worker completes the training.

Further, according to the present embodiment, since the worker information is automatically updated, it is possible to prevent the occurrence of a situation in which a work request corresponding to a newly acquired skill cannot be received, or the like.

Further, in each of the above-described embodiments, the shovel 100 has been described as an example of a working machine. However, the working machine may be other than the shovel 100. The working machine may be any type of working machine capable of acquiring the work pattern performance information and the environmental condition performance information of the own machine and transmitting the information to the management device 300.

While the preferred embodiments of the invention have been described in detail above, the invention is not limited to the embodiments described above, and various modifications and substitutions can be made to the embodiments described above without departing from the scope of the invention.

The patent application is based on and claims priority to Japanese Patent Application No. 2019-119886, filed on June 27, 2019, with the Japan

### Patent Office, and the entire contents of Japanese

Patent Application No. 2019-119886 are hereby incorporated by reference.

### DESCRIPTION OF THE REFERENCE NUMERALS

30 Controller
31 Operation valve
40 Display device
42 Input device
80 Imaging device
80B, 80F, 80L, 80R cameras
100 Shovel [construction machinery]
200 Flight object
300, 300 A, 300 B, 300 C Management devices
301 Information transmitting unit
302 Work pattern acquisition unit
303 Machine guidance unit
310 Worker information storage unit
320 Desired condition information storage unit
330 Skill Evaluation information storage unit
340 Qualification information storage unit
350 Search processing unit
360 Skill evaluation unit
370 Review information storage unit
400 Terminal device (Worker's terminal device)
500 Terminal device (Contractor's terminal device)

## Claims

1. A management system of a work machine of managing the work machine comprising:
a skill evaluation unit that generates and stores skill evaluation information associated with an evaluation result of an operating skill of a worker who operates the work machine and identification information identifying the worker in a storage unit based on work performance information obtained from the work machine;
a search processing unit that receives a search condition of the worker input from a contractor's terminal device, searches the storage unit, and extracts the worker's identification information associated with the evaluation result that satisfies the search condition; and
an output unit that outputs the search result to the contractor's terminal device.

2. The management system of a work machine according to claim 1, wherein the output unit transmits a notification, indicating that a work request has been made, from the contractor's terminal device to a worker's terminal device of the worker specified by the identification information in response to selection of identification information of the worker accepting the work request.

3. The management system of a work machine according to claim 2,
wherein the storage unit stores identification information of the worker and the desired conditions information including one or more of the desired conditions information including one or more of a period of work to be performed, an area where the work to be performed, and a wage for the work;
wherein the search condition includes a period of the work to be performed, an area where the work to be performed, and the wage for the work; and
wherein the search processing unit references the desired condition information to extract the identification information of a worker satisfying the search condition.

4. The management system of a work machine according to claim 3,
wherein the skill evaluation unit includes
a work type identification unit of identifying the work type performed by the work machine based on the work performance information,
a worker identification unit that identifies the worker who operates the work machine at the time of obtaining the work performance information,
an index calculation unit that calculates an index indicating a level of operating skill of a specified worker for each type of work specified, and
a storage unit that associates the index of each type of the work with an identification information of the worker corresponding to the skill evaluation information, and stores the evaluation information in the storage unit.

5. The management system of a work machine according to claim 4, wherein the skill evaluation unit updates the skill evaluation information of the worker, the update being performed every time the work, who operates the work machine performance, information is acquired from the work machine.

6. The management system of a work machine according to claim 5,
wherein the storage unit stores information indicating a family composition of the worker, and
wherein the output unit transmits a notification based on both information indicating the family composition of the worker and externally provided residential area information regarding a residential area of the worker to at least one of the contractor's terminal device and the worker's terminal device.

7. A management device of a work machine comprising:
a skill evaluation unit that generates and stores a skill evaluation information corresponding to an evaluation result of an operating skill of a worker who operates the work machine and an identification information identifying the worker in a storage unit by using work performance information obtained from the work machine;
a search processing unit that receives a search condition of the worker input from a contractor's terminal device, search the storage unit, and extracts the worker's identification information associated with the evaluation result satisfying the search condition; and
an output unit that outputs the search result to the contractor's terminal device.

8. A worker's terminal device comprising:
a reception unit that receives input of information of a worker who operates a work machine, a job condition desired by the worker, and
a transmitting unit that transmits an input of information about the worker and the desired condition to a management device that manages the work machine.

9. The worker's terminal device according to claim 8, further comprising:
a display unit configured to display a screen indicating that a work request has been received,
wherein one or more of photograph of a worksite associated with the requested work, a conceptional drawing after the work, an overall construction period, an overall process, a number of workers required for the work details, and a number of workers in shortage, are displayed on the displayed screen.

10. The worker's terminal device according to claim 9,
wherein an icon image corresponding to the work is displayed on the screen, and
wherein, when the icon image is selected, one or more of the photograph of the work site associated with the icon image, the conceptional drawing after the work, the overall construction period, the overall process, the number of workers required for the work details, and the number of workers in shortage, are displayed on the screen.

11. The worker's terminal device according to claim 10,
wherein when a plurality of work requests is received, a list of the plurality of work requests is displayed on the screen, and
wherein when a work request is selected from the list, one or more of the photograph of the work site associated with the selected work request, the conceptional drawing after the work, the overall construction period, the overall process, the number of workers required for the work details, and the number of workers in shortage, are displayed on the screen.

12. A contractor's terminal device comprising:
a transmitting unit that receives an input of a search condition of a worker operating a work machine and transmits search condition information indicating the search condition to a management device that manages the work machine; and
a display unit that displays a search results including a list of workers who satisfy the search condition,
wherein the transmitting unit notifies the management device of a request to transmit a work request to a worker selected from the list.

13. The contractor's terminal device according to claim 12,
wherein the search condition includes an index indicating a level of operating skill of each work type of the work machine by the worker, and
wherein the display unit displays an input screen that receives input of a search condition, including the index, a work schedule, an area, a required qualification, and a work type.

14. The contractor's terminal device according to claim 13,
wherein the display unit displays information relating to the selected worker in the list of workers,
wherein one or more of the information includes the selected worker's index corresponding to a work type requested by the worker, a qualification held by the selected worker, an image of the selected worker, information relating to a plurality of work details.

15. The contractor's terminal device according to claim 14,
wherein the display unit displays one or more of work efficiency of the selected worker, fuel efficiency, and actual work efficiency by a numerical value, or a graph, or both.
